# EUROPEAN PATENT SPECIFICATION

(11) **EP 3 355 508 B1**
(45) Date of publication and mention of the grant of the patent: **04.05.2022**
(21) Application number: 16854863.4
(22) Date of filing: 20.09.2016
(51) Int. Cl.: H04L 5/00, H04L 29/06

(54) **METHOD AND DEVICE FOR CREATING MEDIUM ACCESS CONTROL ENTITY**
VERFAHREN UND VORRICHTUNG ZUR ERZEUGUNG EINER MEDIENZUGANGSKONTROLLEINHEIT
PROCÉDÉ ET APPAREIL DE CRÉATION D'ENTITÉ DE COMMANDE D'ACCÈS AU SUPPORT

(30) Priority: 13.10.2015 CN 201510669850
(43) Date of publication of application: 01.08.2018
(73) Proprietor: Huawei Technologies Co., Ltd., Longgang District Shenzhen, Guangdong 518129 (CN)
(72) Inventor: LIU, Yalin, Shenzhen Guangdong 518129 (CN); XIE, Yong, Shenzhen Guangdong 518129 (CN); ZENG, Guangzhu, Shenzhen Guangdong 518129 (CN)
(74) Representative: Pfenning, Meinig & Partner mbB
(86) International application number: PCT/CN2016/099453
(87) International publication number: WO 2017/063481

(56) References cited:
- WO-A2-2013/126859
- CN-A- 101 227 383
- CN-A- 101 292 556
- US-A1- 2008 139 212
- US-A1- 2012 026 986
- US-A1- 2013 088 983

## Description

### TECHNICAL FIELD

The present invention relates to the field of communications technologies, and specifically, to a method and device for data scheduling.

### BACKGROUND

Filter orthogonal frequency division multiplexing (Filter Orthogonal Frequency Division Multiplex, "F-OFDM" for short) is a new communications technology. The F-OFDM technology divides a spectrum into multiple subbands. In the F-OFDM, a subband may be bandwidth that has a same subband parameter (numerology) or a set of subcarriers that have a same subband parameter. Each subband may include multiple subcarriers. Parameters (numerology) of different subbands may be the same or may be different. A subband parameter includes at least one of subcarrier bandwidth, a transmission time interval (Transmission Time Interval, TTI) length, a symbol length, a quantity of symbols, a cyclic prefix (Cyclic Prefix, CP) length, or the like. The subband parameter may be preconfigured or may be flexibly adapted according to service load. Different subbands may be used for different types of services.

The F-OFDM technology has the following characteristic: Different types of service data are separately transmitted by using multiple subbands, so that requirements of different services for delay sensitivity, reliability, bandwidth, low power consumption, cost effectiveness, and the like are met. When a user equipment runs multiple different types of services simultaneously, a conventional communication solution cannot leverage the characteristic of the F-OFDM technology during data scheduling for the following reason: Data of different service types is scheduled in a same Media Access Control (Medium Access Control, MAC) entity, and one MAC entity has only one scheduling period. In this case, when one MAC entity is used for scheduling for multiple subbands, scheduling accuracy of different services is affected, and implementation complexity exponentially increases. US2008/139212 A1 describes an apparatus and a method for interoperation of various radio links with a piconet link in a wireless device.

WO 2013/126859 A2 describes an opportunistic radio access technology selection and aggregation.

US 2013/088983 A1 describes a method and an apparatus for integrating different radio access technologies using carrier aggregation.

### SUMMARY

To resolve a prior-art problem that one MAC entity needs to be responsible for scheduling data onto multiple subbands, embodiments of the present invention provides a data scheduling method and device according to the independent claims.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person skilled in the art may still derive other drawings from these accompanying drawings without creative efforts.
FIG. 1 is a schematic diagram of subband division of an F-OFDM system;
FIG. 2 is a schematic diagram of a subband period relationship;
FIG. 3 is a schematic diagram of an embodiment of a method for creating a MAC entity according to an embodiment of the present invention;
FIG. 4 is a schematic diagram of another embodiment of a method for creating a MAC entity according to an embodiment of the present invention;
FIG. 5 is a schematic diagram of another embodiment of a method for creating a MAC entity according to an embodiment of the present invention;
FIG. 6A and FIG. 6B are a schematic diagram of an embodiment of a bearer establishment procedure according to an embodiment of the present invention;
FIG. 7 is a schematic diagram of another embodiment of a bearer establishment procedure according to an embodiment of the present invention;
FIG. 8 is a schematic structural diagram of a data radio bearer configuration parameter;
FIG. 9 is a schematic structural diagram of a signaling radio bearer configuration parameter;
FIG. 10 is a schematic diagram of an embodiment of a data scheduling method according to an embodiment of the present invention;
FIG. 11 is a schematic diagram of a correspondence between a MAC entity and a subband;
FIG. 12 is another schematic diagram of a correspondence between a MAC entity and a subband;
FIG. 13A and FIG. 13B are a schematic diagram of a logical architecture of a network device;
FIG. 14 is a schematic diagram of a logical architecture of user equipment;
FIG. 15 is a schematic diagram of packet distribution;
FIG. 16 is a schematic diagram of a correspondence between an identity of a logical channel and an identity of a MAC entity;
FIG. 17 is a structural format diagram of a MAC entity;
FIG. 18 is a schematic diagram of a load balancing instance;
FIG. 19 is a schematic diagram of a data scheduling procedure in the instance in FIG. 18;
FIG. 20A and FIG. 20B are a schematic diagram of another logical architecture of a network device;
FIG. 21 is a schematic diagram of an embodiment of a network device according to an embodiment of the present invention;
FIG. 22 is a schematic diagram of an embodiment of user equipment according to an embodiment of the present invention;
FIG. 23 is a schematic diagram of an embodiment of a network device according to an embodiment of the present invention;
FIG. 24 is a schematic diagram of an embodiment of user equipment according to an embodiment of the present invention;
FIG. 25 is a schematic diagram of an embodiment of a network device/user equipment according to an embodiment of the present invention;
FIG. 26 is a schematic diagram of another embodiment of a network device according to an embodiment of the present invention; and
FIG. 27 is a schematic diagram of an embodiment of user equipment according to an embodiment of the present invention.

### DESCRIPTION OF EMBODIMENTS

The examples of the present invention provide a method for creating a MAC entity, so that a MAC entity whose scheduling period is consistent with a TTI of each subband can be created for the subband. Therefore, consistency between data scheduling and transmission is ensured. The embodiments of the present invention further provide a corresponding data scheduling method and a corresponding device as defined by the independent claims. The following separately provides detailed descriptions.

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person skilled in the art based on the embodiments of the present invention without creative efforts shall fall within the protection scope of the present invention, as defined by the appended claims.

It should be understood that the technical solutions in the embodiments of the present invention may be applied to various communications systems, such as a Global System for Mobile Communications (Global System of Mobile Communication, "GSM" for short) system, a Code Division Multiple Access (Code Division Multiple Access, "CDMA" for short) system, a Wideband Code Division Multiple Access (Wideband Code Division Multiple Access, "WCDMA" for short) system, a general packet radio service (General Packet Radio Service, "GPRS" for short) system, a Long Term Evolution (Long Term Evolution, "LTE" for short) system, an LTE frequency division duplex (Frequency Division Duplex, "FDD" for short) system, an LTE time division duplex (Time Division Duplex, "TDD" for short) system, a Universal Mobile Telecommunications System (Universal Mobile Telecommunication System, "UMTS" for short), a Worldwide Interoperability for Microwave Access (Worldwide Interoperability for Microwave Access, "WiMAX" for short) communications system, and a future 5G communications system.

A communications system to which the embodiments of the present invention are applied includes user equipment and a network device.

The user equipment may communicate with one or more core networks by using a radio access network (Radio Access Network, RAN). The user equipment (User Equipment, "UE" for short) may be access user equipment, a subscriber unit, a subscriber station, a mobile station, a mobile, a remote station, remote user equipment, a mobile device, a wireless communications device, a user agent, or a user apparatus. The access user equipment may be a cellular phone, a cordless phone, a Session Initiation Protocol (Session Initiation Protocol, "SIP" for short) phone, a wireless local loop (Wireless Local Loop, "WLL" for short) station, a personal digital assistant (Personal Digital Assistant, "PDA" for short), a handheld device having a wireless communication function, a computing device, another processing device connected to a wireless modem, an in-vehicle device, a wearable device, user equipment in a future 5G network, or the like.

The network device may be a device configured to communicate with the user equipment. For example, the network device may be a base transceiver station (Base Transceiver Station, "BTS" for short) in a GSM or CDMA system, or may be a NodeB (NodeB, "NB" for short) in a WCDMA system, or may be an evolved NodeB (Evolutional Node B, "eNB" or "eNodeB" for short) in an LTE system. Alternatively, the network device may be a relay station, an access point, an in-vehicle device, a wearable device, a network-side device in a future 5G network, a network device in a future evolved PLMN network, or the like.

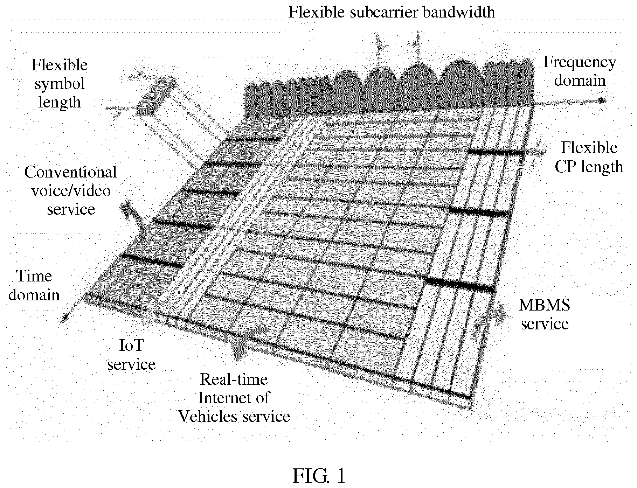

For understanding of an F-OFDM solution in the embodiments of the present invention, refer to FIG. 1. FIG. 1 is a schematic diagram of subband division of an F-OFDM system according to an embodiment of the present invention. As shown in FIG. 1, a radio signal for communication between a network device and user equipment has a specific spectrum, the spectrum is divided into multiple subbands, and the subbands have different parameters (numerology). A subband parameter includes at least one of subcarrier bandwidth, a transmission time interval (Transmission Time Interval, "TTI" for short) length, a symbol length, a quantity of symbols, a cyclic prefix (Cyclic Prefix, "CP" for short) length, or the like. The subband parameter may be preconfigured or may be flexibly adapted according to service load. Generally, a subband configured by using each type of parameter is suitable for some specific types of services. For example, a conventional voice/video service, an Internet of Things (Internet of Things, "IOT" for short) service, a real-time Internet of Vehicles service, and the multimedia broadcast multicast service (Multimedia broadcast multicast service, "MBMS" for short) are separately distributed on specific subbands. Low subcarrier bandwidth and a relatively high transmission delay are configured for a subband of the IOT service. This is of great significance for densely distributed IOT devices with low power consumption. Highest subcarrier bandwidth and a lowest transmission delay are configured for a subband of the real-time Internet of Vehicles service. That is, subbands may have different attributes, and basic physical layer parameters of the subbands whose attributes are different include at least one parameter that is different for the subbands. For a specific division method, refer to FIG. 1, and details are not described herein.

An F-OFDM subband described in the present invention is different from a carrier or a subband in a carrier in Long Term Evolution (Long Term Evolution, "LTE" for short) or a carrier in LTE-A CA. The F-OFDM subband is referred to as a subband below. The F-OFDM subband is a radio spectrum resource of a specific width in a wireless communications system. The radio spectrum resource includes multiple different subbands, and parameters of the subbands, such as TTIs, subcarrier spacings, and quantities of symbols, are different. The subband in this embodiment of the present invention may be preconfigured, configured semi-statically, or obtained dynamically by means of division by the network device. The network device may configure different subbands for different services according to service statuses. When a communication requirement of a type of service changes, the network device may dynamically adjust (for example, create, modify, or delete) a subband configuration.

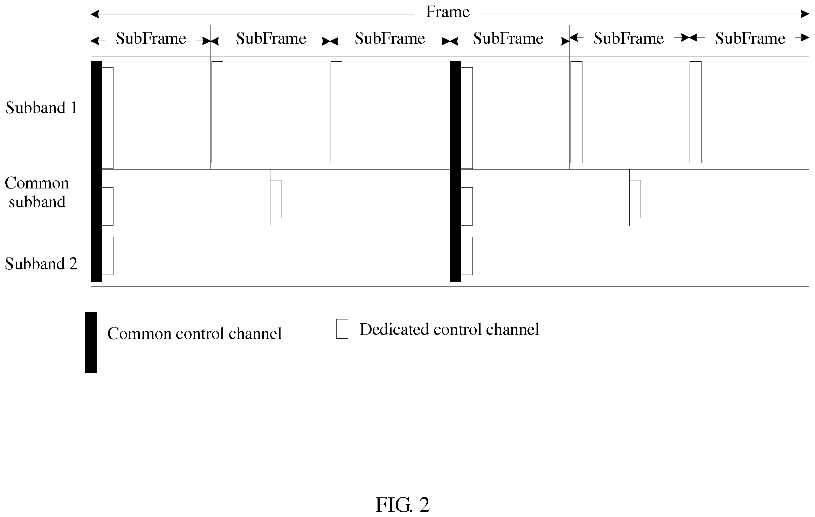

Frequency band resources in F-OFDM are classified into at least a common subband and a service subband. As shown in FIG. 2, a subband 1 and a subband 2 are service subbands. The common subband is mainly responsible for transmission of a common signal and common signaling, for example, a system broadcast message (System Information Block, "SIB" for short), a synchronization signal, a paging message, or a random access message, but can also be used to transmit user service data. The service subband is mainly responsible for transmission of user service data, and the service subband mainly allows users to share a data channel, but can also be used to transmit a SIB, a synchronous signal, a paging message, and a random access message that are exclusive to the service subband. The common subband mainly supports initial access of UE. After accessing a communications system, the UE may switch to the service subband, or may simultaneously perform transmission on multiple subbands. However, dedicated UE may directly perform communication on the service subband without using the common subband.

TTIs of subbands are not totally the same. A quantity of subframes or transmission timeslots specifically included in each frame of each subband is not defined herein. For example, as shown in FIG. 2, a ratio of TTIs of the subband 1, the common subband, and the subband 2 may be 1:2:3, or may be another possible ratio provided that the TTIs are aligned on a frame boundary. Another technical aspect is unrelated to the present invention, and is not described herein.

A TTI configuration shown in FIG. 2 is used as an example. Assuming that a basic scheduling period of a network device is designed according to a minimum scheduling period of the subband 1, and scheduling is performed every 1 ms, scheduling needs to be performed only every 3 ms for the subband 2. This may not be quite difficult. However, for the common subband, a scheduler needs to be designed to perform scheduling according to a period of 1.5 ms, and this is extremely difficult.

In the embodiments of the present invention, a wireless communications device includes a network device and user equipment. Both the network device and the user equipment can create, for each subband, a MAC entity whose scheduling period is consistent with a TTI of the subband, so that consistency and accuracy of scheduling data onto the subbands are ensured.

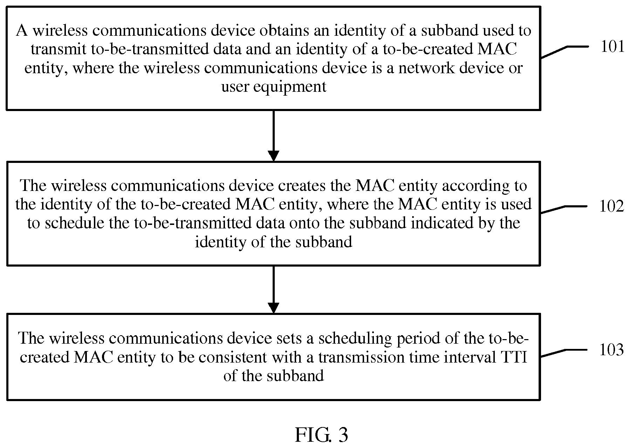

As shown in FIG. 3, an example of a method for creating a MAC entity includes the following steps.

101. A wireless communications device obtains an identity of a subband used to transmit to-be-transmitted data and an identity of a to-be-created MAC entity, where the wireless communications device is a network device or user equipment.

102. The wireless communications device creates the MAC entity according to the identity of the to-be-created MAC entity, where the MAC entity is used to schedule the to-be-transmitted data onto the subband indicated by the identity of the subband.

103. The wireless communications device sets a scheduling period of the to-be-created MAC entity to be consistent with a transmission time interval TTI of the subband.

In the prior art, one MAC entity needs to be responsible for scheduling data onto multiple subbands, and consequently, a scheduling period of the MAC entity is inconsistent with a TTI of a subband. In comparison, in the method for creating a MAC entity provided in this example of the present invention, a MAC entity whose scheduling period is consistent with a TTI of each subband can be created for the subband, so that consistency between data scheduling and transmission is ensured.

The obtaining, by a wireless communications device, an identity of a subband used to transmit to-be-transmitted data may include:
obtaining, by the wireless communications device, the identity of the subband according to a correspondence between a quality of service (Quality of Service, "QoS" for short) class identifier (QoS class identifier, "QCI" for short) of the to-be-transmitted data and the subband.

The correspondence between the QCI and the identity of the subband may be preconfigured in the wireless communications device, such as the network device and the user equipment. In this embodiment of the present invention, when the correspondence changes, the correspondence, in the network device and the user equipment, between the QCI and the identity of the subband may be updated simultaneously.

The correspondence between the identity of the subband and the QCI may be represented by a table, for example, Table 1. The table may include an identity of a subband and a QCI.

**Table 1 Table of a correspondence between an identity of a subband and a QCI**

| **QCI** | **Identity of a subband** |
|---|---|
| 1 | Subband 1 |
| 2 | Subband 4 |
| 3 | Subband 2 |
| 4 | Subband 3 |
| 5 | Subband 1 |
| 6 | Subbands 1, 2, 3, and 4 |
| 7 | Subband 1 |
| 8 | Subbands 1, 2, and 3 |
| 9 | Subband 1 |

When actually transmitting a service, the wireless communications device can select an identity of a subband according to the table of the correspondence between the identity of the subband and the QCI and a QCI of the service. Configuration performed on a subband resource by the network device dynamically changes. Subband resources that can be provided by different network devices for a same QCI at different moments may be different. Antenna radio frequency capabilities of different user equipments may also exert different impact on subbands that can be supported by the user equipments. One QCI may correspond to one subband, or may correspond to multiple subbands. When selecting a subband for transmitting to-be-transmitted data, the wireless communications device selects an intersection set from a subband that can be currently provided by a system and a subband that is determined according to the correspondence between the QCI and the identity of the subband. If the intersection set still includes multiple subbands, the subband is determined according to a subband priority sequence.

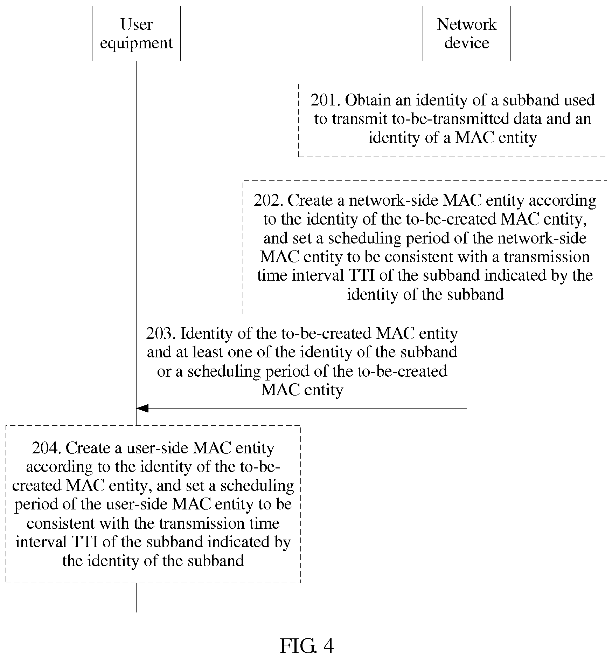

Referring to FIG. 4, another example of a method for creating a MAC entity includes the following steps.

201. A network device obtains an identity of a subband used to transmit to-be-transmitted data and an identity of a MAC entity.

The obtaining, by a network device, an identity of a subband used to transmit to-be-transmitted data may include:
obtaining, by the network device, the identity of the subband according to a correspondence between a quality of service (Quality of Service, "QoS" for short) class identifier QCI of the to-be-transmitted data and the identity of the subband. For details, refer to descriptions in the embodiment in FIG. 3.

202. The network device creates a network-side MAC entity according to the identity of the to-be-created MAC entity, and sets a scheduling period of the network-side MAC entity to be consistent with a TTI of the subband indicated by the identity of the subband.

203. The network device sends the identity of the to-be-created MAC entity and at least one of the identity of the subband or a scheduling period of the to-be-created MAC entity to the user equipment.

204. After receiving the identity of the to-be-created MAC entity and the at least one of the identity of the subband or the scheduling period of the to-be-created MAC entity that are sent by the network device, the user equipment creates a user-side MAC entity according to the identity of the to-be-created MAC entity, and sets a scheduling period of the user-side MAC entity to be consistent with the TTI of the subband indicated by the identity.

Step 204 may include the following two cases:
Case 1: The user equipment receives the identity of the subband and the identity of the to-be-created MAC entity that are sent by the network device.
Case 2: The user equipment receives the scheduling period of the to-be-created MAC entity and the identity of the to-be-created MAC entity that are sent by the network device; and
   the user equipment determines the identity of the subband according to the scheduling period of the to-be-created MAC entity.

In the prior art, one MAC entity needs to be responsible for scheduling data onto multiple subbands, and consequently, a scheduling period of the MAC entity is inconsistent with a TTI of a subband. In comparison, in the method for creating a MAC entity, a MAC entity whose scheduling period is consistent with a TTI of each subband can be created for the subband, so that consistency between data scheduling and transmission is ensured.

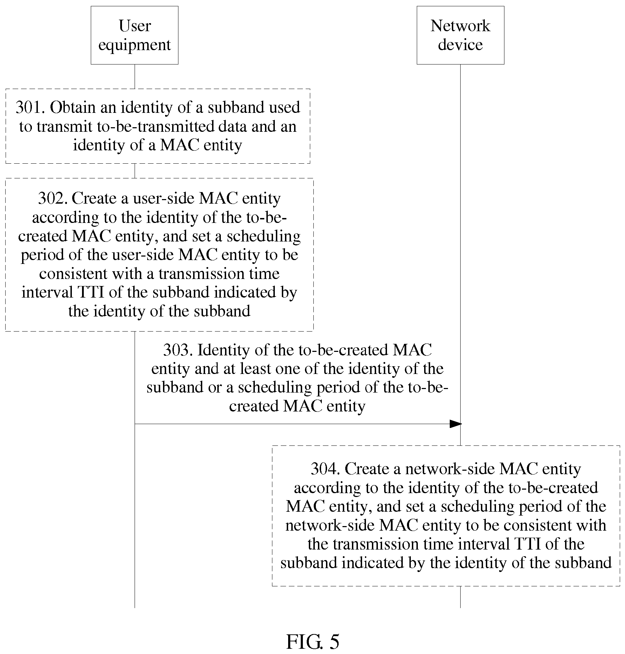

Referring to FIG. 5, another example of a method for creating a MAC entity includes the following steps.

301. User equipment obtains an identity of a subband used to transmit to-be-transmitted data and an identity of a MAC entity.

The obtaining, by user equipment, an identity of a subband used to transmit to-be-transmitted data may include:
obtaining, by the user equipment, the identity of the subband according to a correspondence between a quality of service (Quality of Service, "QoS" for short) class identifier QCI of the to-be-transmitted data and the subband. For details, refer to descriptions in the embodiment in FIG. 3.

302. The user equipment creates a user-side MAC entity according to the identity of the to-be-created MAC entity, and sets a scheduling period of the user-side MAC entity to be consistent with a TTI of the subband indicated by the identity of the subband.

303. The user equipment sends the identity of the to-be-created MAC entity and at least one of the identity of the subband or a scheduling period of the to-be-created MAC entity to a network device.

304. After receiving the identity of the to-be-created MAC entity and the at least one of the identity of the subband or the scheduling period of the to-be-created MAC entity that are sent by the user equipment, the network device creates a network-side MAC entity according to the identity of the to-be-created MAC entity, and sets a scheduling period of the network-side MAC entity to be consistent with the TTI of the subband indicated by the identity of the subband.

Step 304 may include the following two cases:
Case 1: The network device receives the identity of the subband used to transmit the to-be-transmitted data and the identity of the to-be-created MAC entity that are sent by the user equipment.
Case 2: The network device receives the scheduling period of the to-be-created MAC entity and the identity of the to-be-created MAC entity that are sent by the user equipment; and
   the network device determines the identity of the subband according to the scheduling period of the to-be-created MAC entity.

In the prior art, one MAC entity needs to be responsible for scheduling data onto multiple subbands, and consequently, a scheduling period of the MAC entity is inconsistent with a TTI of a subband. In comparison, in the method for creating a MAC entity, a MAC entity whose scheduling period is consistent with a TTI of each subband can be created for the subband, so that consistency between data scheduling and transmission is ensured.

The examples corresponding to FIG. 4 and FIG. 5 separately describe, in detail, procedures of creating a MAC entity on a network device side and a user equipment side. After both a network-side MAC entity and a user-side MAC entity are created, corresponding uplink or downlink data service transmission may be performed.

The procedures of creating a MAC entity that are described in the examples corresponding to FIG. 4 and FIG. 5 may be actually implemented in a radio bearer establishment procedure, for example, may be implemented in a data radio bearer (Date Radio Bearer, "DRB" for short) establishment procedure or a signaling radio bearer (Signaling Radio Bearer, "SRB" for short) establishment procedure. In addition, a MAC entity may be created by using control signaling (Control Element, "CE" for short).

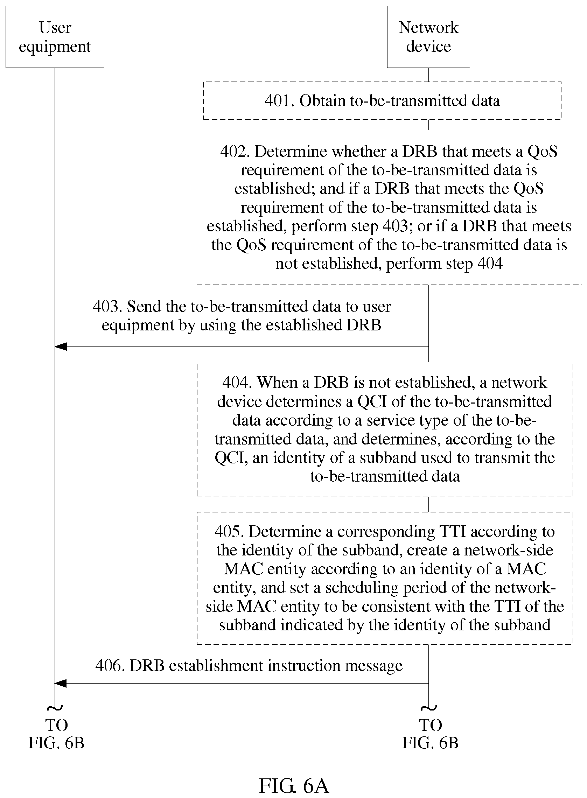

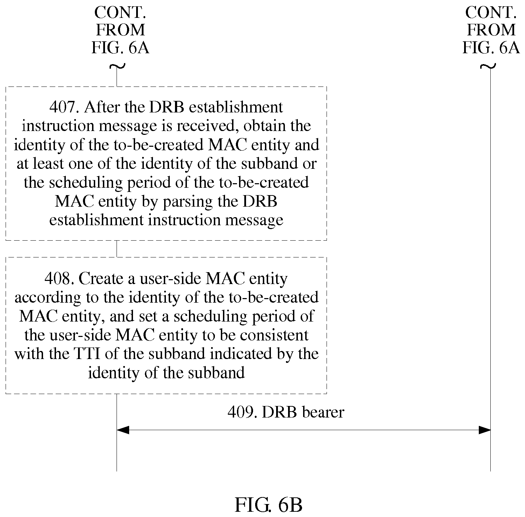

Referring to FIG. 6A and FIG. 6B, the following describes a procedure of creating a MAC entity in a DRB establishment procedure in an example of the present invention.

401. A network device obtains to-be-transmitted data.

402. The network device determines whether a DRB that meets a QoS requirement of the to-be-transmitted data is established; and if a DRB that meets the QoS requirement of the to-be-transmitted data is established, performs step 403; or if a DRB that meets the QoS requirement of the to-be-transmitted data is not established, performs step 404.

403. The network device sends the to-be-transmitted data to the user equipment by using the established DRB.

404. When a DRB is not established, the network device determines a QCI of the to-be-transmitted data according to a service type of the to-be-transmitted data, and determines, according to the QCI, an identity of a subband used to transmit the to-be-transmitted data.

A procedure of determining the QCI of the to-be-transmitted data according to the service type of the to-be-transmitted data may be understood as follows.

Service types may be classified according to a data transmission QoS attribute, for example, a delay requirement, a rate requirement, reliability, or a minimum packet length. A correspondence between the QCI and the service type may be preconfigured in a wireless communications device, such as the network device and the user equipment. In this example of the present invention, when the correspondence between the QCI and the service type changes, the correspondence, in the network device and the user equipment, between the QCI and the service type may be updated simultaneously.

The correspondence between the QCI and the service type may be represented by a table. A relationship between some QCIs and service types is defined in the prior art. Herein, QCIs are classified into nine classes, and specific content is shown in Table 2.

**Table 2 Table of a correspondence between a QCI and a service type**

| **Quality of service class identifier (QCI)** | **resource type** | **Priority** | **Packet delay budget** | **Packet error loss rate** | **Example service** |
|---|---|---|---|---|---|
| 1 | guaranteed bit rate (Guranteed Bit Rate, "GBR" for short) | 2 | 100 ms | 10⁻² | Conversational voice (Conversational Voice) |
| 2 | | 4 | 150 ms | 10⁻³ | Conversational voice, live streaming (Conversational Video, Live Streaming) |
| 3 | | 3 | 50 ms | 10⁻³ | Real-time gaming (Real Time Gaming) |
| 4 | | 5 | 300 ms | 10⁻⁶ | Non-conversational voice (Non-conversational Video) |
| 5 | Non-GBR | 1 | 100 ms | 10⁻⁶ | IP multimedia system signal (IMS Signalling) |
| 6 | | 6 | 300 ms | 10⁻⁶ | Voice, buffered streaming (Video, Buffered Streaming) and Transmission Control Protocol (TCP)-based service |
| 7 | | 7 | 100 ms | 10⁻³ | Interactive gaming (Interactive Gaming) Voice (Voice) and video, live streaming (Video, Live Streaming) |
| 8 | | 8 | 300 ms | 10⁻⁶ | Video, buffered streaming (Video, Buffered Streaming) and Transmission Control Protocol (TCP)-based service |
| 9 | | 9 | 300 ms | 10⁻⁶ | Progressive video (progressive video) |

Table 2 describes the relationship between the QCI and the service type merely by using an example. Content in Table 2 needs to be redefined in a future 5G standard for the following reason: In an existing QCI definition, a packet delay is extremely high, and a lowest delay of a QCI 3 is 50 ms, but an air interface delay in 5G is only 1 ms. In addition, Internet of Things applications are not considered in the existing definition. The Internet of Things applications are mainly classified into two types: a low-delay and high-reliability service and a service connected to many devices. Because an F-OFDM system needs to support these service types, the QCI definition needs to be modified. When a new standard similar to a QCI is being defined, a correspondence between division of an identity of a subband in the F-OFDM system and a QCI needs to be considered.

When the service type of the to-be-transmitted data is determined, the QCI of the to-be-transmitted data may be determined, and the identity of the subband may be determined according to the correspondence between the QCI and the identity of the subband. For understanding of a procedure of determining, according to the QCI, the identity of the subband used to transmit the to-be-transmitted data, refer to descriptions in the embodiment in FIG. 3, and details are not described herein.

In addition, the subband has a parameter such as a TTI or a subcarrier width. A relationship between the identity of the subband and the parameter of the subband, such as the TTI or the subcarrier width, may be represented by a table, for example, Table 3. For understanding of the correspondence between the identity of the subband and the parameter of the subband, refer to Table 3.

**Table 3 Subband parameter table**

| **Identity of a subband** | **TTI** | **Subcarrier width** |
|---|---|---|
| Subband 1 | 1 ms | 15 khz |
| Subband 2 | 0.5 ms | 30 khz |
| Subband 3 | 0.125 ms | 120 khz |
| Subband 4 | 3 ms | 15 khz |

Actually, Table 3 may further include more subband parameters. The TTI and the subcarrier width are used only as examples for description herein, and shall not be construed as a limitation to subband parameters.

405. The network device determines a corresponding TTI according to the identity of the subband, creates a network-side MAC entity according to an identity of a MAC entity, and sets a scheduling period of the network-side MAC entity to be consistent with the TTI of the subband indicated by the identity of the subband.

The corresponding TTI may be determined according to the identity of the subband from, for example, the correspondence in Table 3.

406. The network device initiates a DRB establishment instruction message to the user equipment, where the bearer establishment instruction message carries the identity of the to-be-created MAC entity and at least one of the identity of the subband or a scheduling period of the to-be-created MAC entity.

Certainly, the DRB establishment instruction message is not a limitation, and may be another message, for example, a radio resource control (Radio Resource Control, "RRC" for short) connection reconfiguration message.

In this example of the present invention, the identity of the subband and the scheduling period of the to-be-created MAC entity may be determined according to each other. For example, the corresponding TTI may be determined according to the identity of the subband by using, for example, a correspondence that is between the identity of the subband and the TTI and that is described in Table 3, and the TTI is used as the scheduling period of the to-be-created MAC entity. In addition, a TTI that is the same as the scheduling period of the to-be-created MAC entity may also be found in, for example, Table 3 according to the scheduling period of the to-be-created MAC entity, and then, the identity that is of the subband and that corresponds to the TTI is determined according to the correspondence that is between the identity of the subband and the TTI and that is described in Table 3. Certainly, the DRB establishment instruction message may carry the identity of the subband and the scheduling period of the to-be-created MAC entity. The identity of the to-be-created MAC entity is equivalent to a number or an identity card of the to-be-created MAC entity, and needs to be used when the MAC entity is created. When a management operation, such as deletion or updating, needs to be performed on the created MAC entity, the corresponding MAC entity needs to be determined according to the identity of the to-be-created MAC entity.

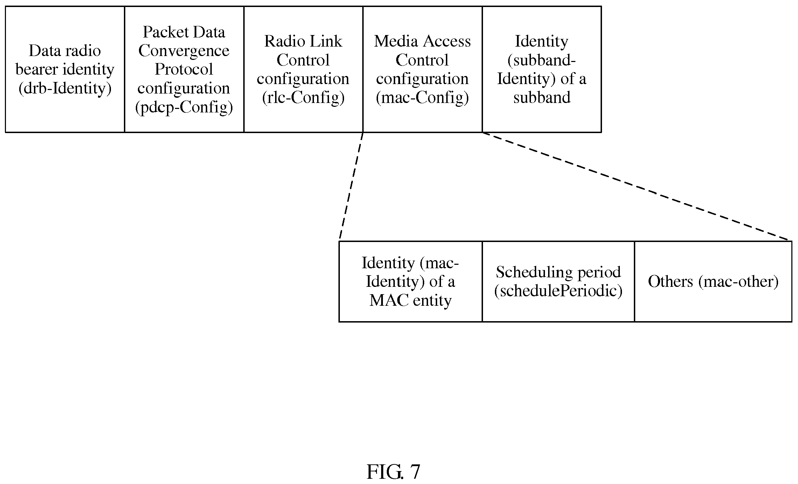

The identity of the to-be-created MAC entity and the at least one of the identity of the subband or the scheduling period of the to-be-created MAC entity may be carried in the DRB establishment instruction message in a format shown in FIG. 7.

A DRB is uniquely identified by a data radio bearer identity (drb-identity). A Packet Data Convergence Protocol (Packet Data Convergence Protocol, "pdcp" for short) configuration (pdcp-Config) defines a configuration of a PDCP sublayer of the DRB, a Radio Link Control (Radio Link Control, "rlc" for short) configuration (rlc-Config) defines a configuration of an RLC sublayer of the DRB, a Media Access Control configuration (mac-config) defines an attribute of a MAC entity bound to the DRB, and an identity (subband-Identity) of a subband specifies an identity of a subband bound to the DRB.

The subband-Identity is an identity of a subband that can be supported by the system, for example, may indicate an identity of a subband in Table 3. The network device and the user equipment can determine a key parameter attribute of a subband, for example, a TTI of the subband, by using the subband-Identity.

The mac-config entity structure mainly defines two attributes: an identity (mac-Identity) of a MAC entity and a scheduling period (schedulePeriodic) of the MAC entity. The schedulePeriodic uses a TTI length of a subband as a value, and may be any TTI of identities of all subbands defined in the system.

To save transmission space, some fields may be omitted sometimes, for example, a scheduling period schedulePeriodic in mac-config is omitted. The schedulePeriodic is indirectly obtained by using a subband-Identity, because a scheduling period of a MAC entity needs to match a TTI length of a subband, and there is a dependency between the scheduling period of the MAC entity and the TTI length of the subband. Certainly, a subband-Identity may be omitted, and the subband-Identity may be determined by using the schedulePeriodic.

407. After receiving the DRB establishment instruction message, the user equipment obtains the identity of the to-be-created MAC entity and the at least one of the identity of the subband or the scheduling period of the to-be-created MAC entity by parsing the DRB establishment instruction message.

408. The user equipment creates a user-side MAC entity according to the identity of the to-be-created MAC entity, and sets a scheduling period of the user-side MAC entity to be consistent with the TTI of the subband indicated by the identity of the subband.

409. The user equipment and the network device complete DRB establishment.

In the prior art, one MAC entity needs to be responsible for scheduling data onto multiple subbands, and consequently, a scheduling period of the MAC entity is inconsistent with a TTI of a subband. In comparison, in the method for creating a MAC entity provided in this example of the present invention, a MAC entity whose scheduling period is consistent with a TTI of each subband can be created for the subband, so that consistency between data scheduling and transmission is ensured.

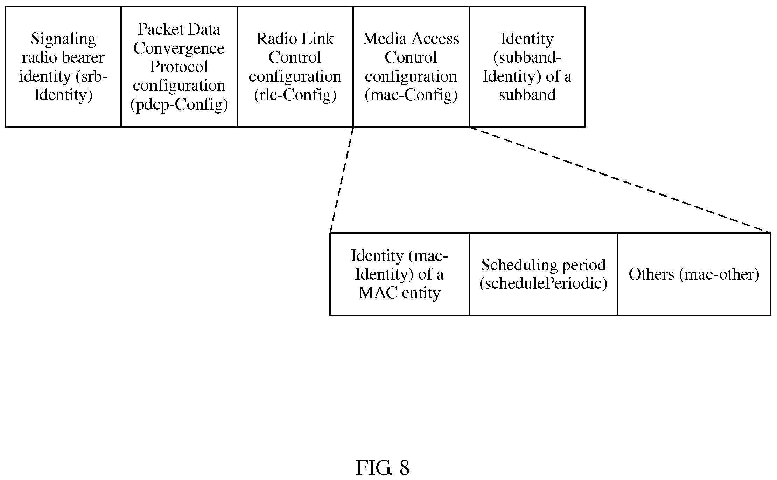

FIG. 6A and FIG. 6B provide descriptions by using an example in which the MAC entity is created in the DRB establishment procedure. Actually, a MAC entity may be created in an SRB establishment procedure. A procedure of creating the MAC entity in the SRB establishment procedure is basically the same as step 401 to step 409 except that the network device initiates an SRB establishment instruction message to the user equipment in step 406 and an SRB is established in step 409. In addition, a format of parameters carried in the SRB establishment instruction message is changed to a format shown in FIG. 8.

The format in FIG. 8 is basically the same as the format in FIG. 7 except that the drb-Identity is changed to a signaling radio bearer identity srb-Identity. For understanding of other parameters, refer to descriptions of parameters in FIG. 7, and details are not described herein.

It should be further noted that the procedure described in FIG. 6A and FIG. 6B is a procedure of creating the MAC entity by the network device in the DRB establishment procedure, and actually, the user equipment may initiate the DRB procedure or the SRB procedure. The user equipment may initiate a DRB establishment request message to the network device. The DRB establishment request message may carry the parameters shown in FIG. 7. Certainly, the DRB establishment request message may not carry the parameters shown in FIG. 7. Then, after receiving the DRB establishment request message, the network device determines the parameters shown in FIG. 7, and the DRB establishment instruction message in step 406 carries the parameters shown in FIG. 7. Actually, regardless of whether the network device initiates the DRB establishment procedure or the user equipment initiates the DRB procedure, for understanding of the procedure of creating the MAC entity, refer to related descriptions in the examples in FIG. 4, FIG. 5, and FIG. 6A and FIG. 6B.

It should be noted that in the DRB establishment procedure, a corresponding MAC entity may have been established. This may occur when a DRB and another bearer share a same subband transmission resource. In this case, an established DRB needs to be bound to the existing MAC entity. Multiple DRBs are scheduled by using a same MAC entity.

In this example of the present invention, the DRB establishment procedure may be performed together with the following procedures in a non-access stratum (Non Access Stratum, "NAS" for short) protocol:
an attach procedure (Attach procedure), a service request procedure (Service request procedure), a packet data network connectivity procedure (PDN connectivity procedure), a bearer resource configuration procedure (Bearer resource allocation procedure), and a bearer resource modification procedure (Bearer resource modification procedure).

In the foregoing procedures, the network device usually triggers a radio resource control RRC connection reconfiguration (RRCConnectionReconfiguration) message for the user equipment. The RRC connection reconfiguration message includes content shown in FIG. 7.

The example corresponding to FIG. 6A and FIG. 6B describes the procedure of creating the MAC entity in the DRB establishment procedure. Actually, the procedure of creating the MAC entity may not be completed by using the radio bearer establishment procedure.

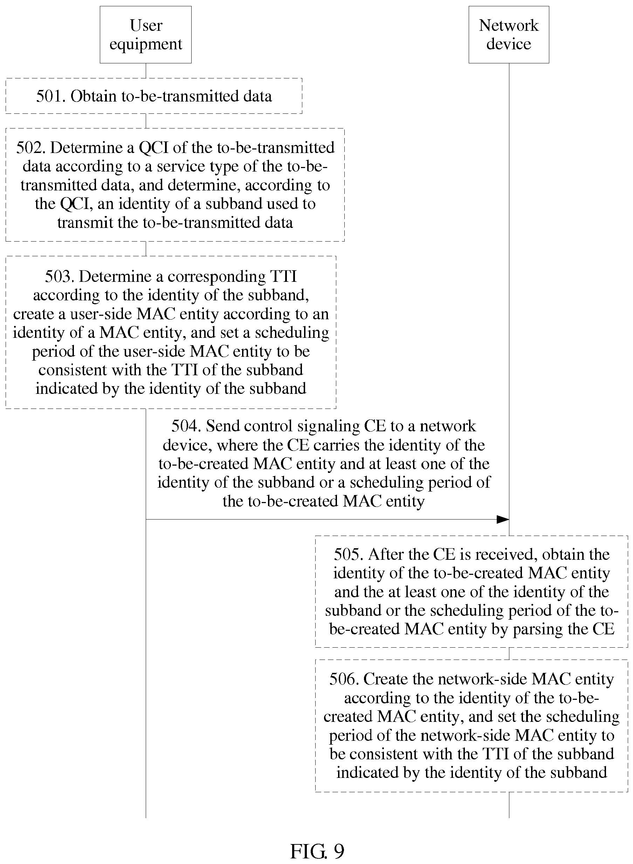

As shown in FIG. 9, a procedure of creating a MAC entity by using control signaling CE is described.

501. User equipment obtains to-be-transmitted data.

502. The user equipment determines a QCI of the to-be-transmitted data according to a service type of the to-be-transmitted data, and determines, according to the QCI, an identity of a subband used to transmit the to-be-transmitted data.

For understanding of the procedure of step 502, refer to related descriptions in step 404, and details are not described herein.

503. The user equipment determines a corresponding TTI according to the identity of the subband, creates a user-side MAC entity according to an identity of a MAC entity, and sets a scheduling period of the user-side MAC entity to be consistent with the TTI of the subband indicated by the identity of the subband.

For understanding of the procedure of step 503, refer to related descriptions in step 405, and details are not described herein.

504. The user equipment sends control signaling CE to a network device, where the CE carries the identity of the to-be-created MAC entity and at least one of the identity of the subband or a scheduling period of the to-be-created MAC entity.

505. After receiving the CE, the network device obtains the identity of the to-be-created MAC entity and the at least one of the identity of the subband or the scheduling period of the to-be-created MAC entity by parsing the CE.

506. The network device creates the network-side MAC entity according to the identity of the to-be-created MAC entity, and sets the scheduling period of the network-side MAC entity to be consistent with the TTI of the subband indicated by the identity of the subband.

In the prior art, one MAC entity needs to be responsible for scheduling data onto multiple subbands, and consequently, a scheduling period of the MAC entity is inconsistent with a TTI of a subband. In comparison, in the method for creating a MAC entity provided in this example of the present invention, a MAC entity whose scheduling period is consistent with a TTI of each subband can be created for the subband, so that consistency between data scheduling and transmission is ensured.

FIG. 9 provides descriptions in terms of sending the CE by the user equipment. Actually, the network device may send the CE, provided that execution procedures of the network device and the user equipment are transposed. Details are not described herein.

In this example of the present invention, during transmission, data is generally transmitted on a logical channel at a logical link layer, and then is scheduled onto a subband by a MAC entity for transmission at a physical layer. Sometimes, an amount of data on one logical channel may be quite large, and congestion may occur if the data on the logical channel is transmitted by using only one subband. In this case, the logical channel is bound to MAC entities, so that the data on the logical channel can be transmitted on multiple subbands, because each MAC entity is bound to one subband.

A specific binding manner may be:
sending, by the network device to the user equipment, an identity of a logical channel, a binding instruction, and identities of multiple MAC entities bound to the logical channel, where the binding instruction is used to instruct the user equipment to bind the multiple MAC entities to the logical channel;
receiving, by the user equipment, the identities of the multiple MAC entities bound to the logical channel, the identity of the logical channel, and the binding instruction that are sent by the network device; and
binding, by the user equipment, the multiple MAC entities to the logical channel according to the binding instruction.

Another specific binding manner may be:
sending, by the user equipment to the network device, an identity of a logical channel and identities of multiple MAC entities bound to the logical channel;
receiving, by the user equipment, a binding instruction sent by the network device;
binding, by the user equipment, the multiple MAC entities to the logical channel according to the binding instruction;
receiving, by the network device, the identities of the multiple MAC entities bound to the logical channel and the identity of the logical channel that are sent by the user equipment; and
sending, by the network device, the binding instruction to the user equipment, where the binding instruction is used to instruct the user equipment to bind the multiple MAC entities to the logical channel.

Binding information may be transferred by using control signaling CE.

An embodiment of the present invention further provides a data scheduling solution. A MAC entity used in a data scheduling procedure may be created by using the method for creating a MAC entity in the embodiments in FIG. 3 to FIG. 9, or may be a MAC entity obtained by using another method.

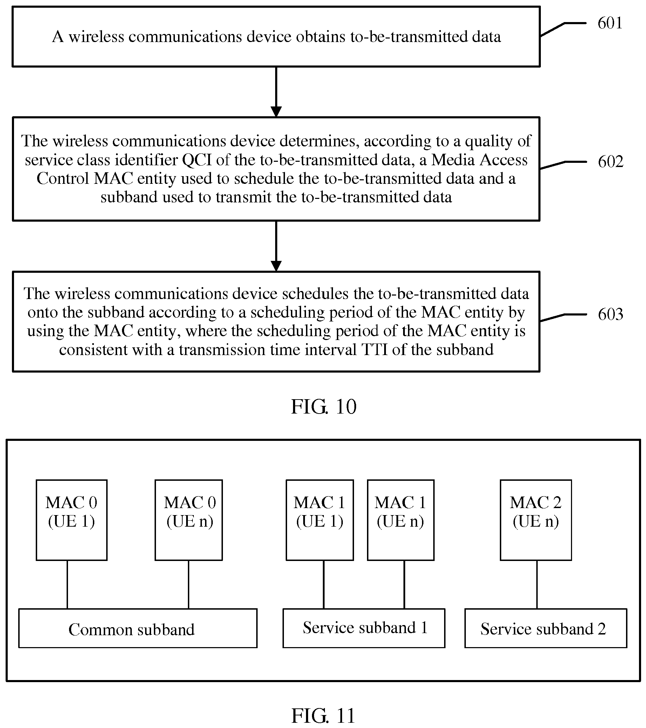

As shown in FIG. 10, an embodiment of a data scheduling method according to the present invention includes the following steps.

601. A wireless communications device obtains to-be-transmitted data.

602. The wireless communications device determines, according to a quality of service class identifier QCI of the to-be-transmitted data, a Media Access Control MAC entity used to schedule the to-be-transmitted data and a subband used to transmit the to-be-transmitted data.

In this embodiment of the present invention, for understanding of a correspondence configured between the QCI and an identity of the subband, refer to descriptions in the embodiment in FIG. 3.

603. The wireless communications device schedules the to-be-transmitted data onto the subband according to a scheduling period of the MAC entity by using the MAC entity, where the scheduling period of the MAC entity is consistent with a transmission time interval TTI of the subband.

In the prior art, one MAC entity needs to be responsible for scheduling data onto multiple subbands, and consequently, a scheduling period of the MAC entity is inconsistent with a TTI of a subband. In comparison, in the data scheduling method provided in this embodiment of the present invention, the scheduling period of the MAC entity that is responsible for scheduling the data onto the subband is consistent with the TTI of the subband, so that consistency between data scheduling and transmission is ensured.

According to the invention, the determining, by the wireless communications device according to a quality of service class identifier QCI of the to-be-transmitted data, a subband used to transmit the to-be-transmitted data may include:
determining, by the wireless communications device, the subband according to the QCI and the correspondence between the QCI and the identity of the subband.

Optionally, the MAC entity is bound to a logical channel group.

The scheduling, by the wireless communications device, the to-be-transmitted data onto the subband according to a scheduling period of the MAC entity by using the MAC entity may include:
scheduling, by the wireless communications device, the to-be-transmitted data from the bound logical channel group by using the MAC entity, and scheduling the to-be-transmitted data onto the subband according to the scheduling period of the MAC entity.

Optionally, the MAC entity includes a scheduler, a multiplexer, and a hybrid automatic repeat request HARQ controller.

The scheduling, by the wireless communications device, the to-be-transmitted data from the bound logical channel group by using the MAC entity, and scheduling the to-be-transmitted data onto the subband according to the scheduling period of the MAC entity may include:
obtaining, by the wireless communications device from multiple logical channels in the logical channel group by using the scheduler, the to-be-transmitted data transmitted from the multiple logical channels;
multiplexing, by the wireless communications device, the to-be-transmitted data on the multiple logical channels by using the multiplexer; and
controlling, by the wireless communications device by using the hybrid automatic repeat request HARQ controller, reliable transmission, on the subband, of the to-be-transmitted data multiplexed by the multiplexer.

Optionally, when any logical channel in the logical channel group is bound to multiple MAC entities, the any logical channel further includes a load balancer, and the method may further include:
determining, by the wireless communications device by using the load balancer, a ratio of scheduling the to-be-transmitted data in the multiple MAC entities, and controlling the multiple MAC entities to schedule, according to the scheduling ratio, the to-be-transmitted data from the any logical channel.

According to the invention, the data scheduling method in this embodiment of the present invention may further include:
obtaining, by the wireless communications device, the identity of the subband used to transmit the to-be-transmitted data and an identity of the MAC entity;
creating, by the wireless communications device, the MAC entity according to the identity of the MAC entity; and
setting, by the wireless communications device, the scheduling period of the MAC entity to be consistent with the transmission time interval TTI of the subband.

Optionally, the obtaining, by the wireless communications device, the identity of the subband used to transmit the to-be-transmitted data may include:
obtaining, by the wireless communications device, the identity of the subband according to the correspondence between the quality of service class identifier QCI of the to-be-transmitted data and the identity of the subband.

Optionally, when the wireless communications device is the network device, the method may further include:
sending, by the network device, the identity of the MAC entity and at least one of the identity of the subband or the scheduling period of the MAC entity to the user equipment.

Optionally, when the wireless communications device is the user equipment, the method may further include:
sending, by the user equipment, the identity of the MAC entity and at least one of the identity of the subband or the scheduling period of the MAC entity to the network device.

In this example of the present invention, MAC entities may be functionally classified into a common MAC (Common MAC) entity and a dedicated MAC (Dedicated MAC) entity. The common MAC entity is generally used to schedule some system messages, and the dedicated MAC entity is generally used to schedule service data. Each MAC entity corresponds to one subband, and a scheduling period of each MAC entity is consistent with a TTI of the corresponding subband. MAC entities and subbands are not in a one-to-one correspondence with each other. Each MAC entity uniquely corresponds to one subband, but one subband may correspond to multiple MAC entities. One MAC entity corresponds to a same subband for different UEs.

FIG. 11 is a schematic diagram of a correspondence between a MAC entity and a subband according to an example of the present invention.

As shown in FIG. 11, a network device supports transmission of n UEs. Generally, UE 1 and UE n are specially used as examples. The UE 1 transmits services on two subbands: a common subband (common Subband) and a service subband 1 (Subband 1). The UE n transmits services on three subbands: the common subband, the service subband 1 (Subband 1), and a service subband 2 (Subband 2). Table 4 defines transmission time intervals TTIs of the common subband, the service subband 1, and the service subband 2 shown in FIG. 11. In an actual system, there may be more subbands, and there may also be different TTI configurations.

**Table 4 Table of a correspondence between an identity of a subband and a TTI**

| **Identity of a subband** | **TTI** |
|---|---|
| Common subband | 1 ms |
| Service subband 1 | 0.5 ms |
| Service subband 2 | 0.125 ms |

In this way, as shown in Table 4, a scheduling period of MAC 0 (UE 1) is set to 1 ms, a scheduling period of MAC 0 (UE n) is also set to 1 ms, a scheduling period of MAC 1 (UE 1) is set to 0.5 ms, a scheduling period of MAC 1 (UE n) is also set to 0.5 ms, and a scheduling period of MAC 2 (UE n) is set to 0.125 ms.

In this way, the MAC 0 (UE 1) and the MAC 0 (UE n) separately schedule data of the UE 1 and the UE n onto the common subband according to the scheduling period of 1 ms, the MAC 1 (UE 1) and the MAC 1 (UE n) separately schedule data of the UE 1 and the UE n onto the service subband 1 according to the scheduling period of 0.5 ms, and the MAC 2 (UE n) schedules data of the UE n onto the service subband 2 according to the scheduling period of 0.125 ms.

Actually, each MAC entity is bound to a logical channel in an uplink direction, and corresponds to a subband in a downlink direction. Each MAC entity may include a scheduler, a multiplexer, and a hybrid automatic repeat request (Hybrid Automatic Repeat Request, "HARQ" for short) controller.

A scheduler in a MAC entity is configured to schedule data on a logical channel bound to the MAC entity from the logical channel according to a scheduling period, and a multiplexer is configured to multiplex the data scheduled by the scheduler. Multiplexing means combining data on different logical channels into one data stream. A HARQ controller controls reliable transmission, on the subband, of the to-be-transmitted data multiplexed by the multiplexer.

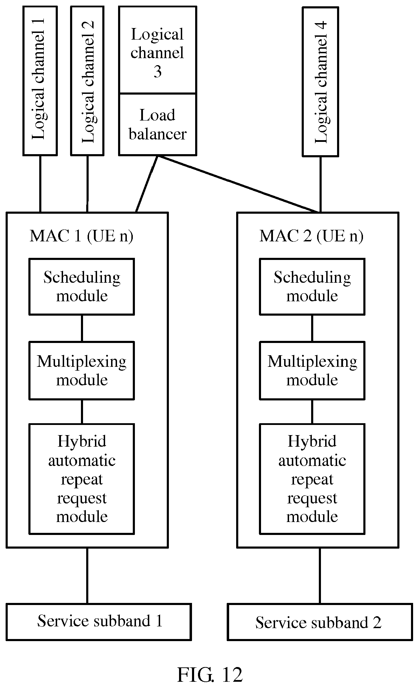

For understanding of a data scheduling procedure and a correspondence between a MAC entity, a logical channel, and a subband, refer to FIG. 12. As shown in FIG. 12, MAC 1 (UE n) is bound to three logical channels in a logical channel group, the three logical channels are a logical channel 1, a logical channel 2, and a logical channel 3, and the MAC 2 (UE n) is bound to the logical channel 3 and a logical channel 4. A scheduler in the MAC 1 (UE n) schedules data from the logical channel 1, the logical channel 2, and the logical channel 3; then, a multiplexer in the MAC 1 (UE n) multiplexes the data on the logical channel 1, the logical channel 2, and the logical channel 3; and finally, the data is scheduled onto a service subband 1 for transmission. A scheduler in the MAC 2 (UE n) schedules data from the logical channel 3 and the logical channel 4; then, a multiplexer in the MAC 2 (UE n) multiplexes the data on the logical channel 3 and the logical channel 4; and finally, the data is scheduled onto a service subband 2 for transmission. The logical channel 3 is bound to both the MAC 1 (UE n) and the MAC 2 (UE n). In this way, data on the logical channel 3 may be separately scheduled by the MAC 1 (UE n) and the MAC 2 (UE n). A ratio of amounts of data scheduled by the MAC 1 (UE n) and the MAC 2 (UE n) may be determined by a load balancer in the logical channel 3.

Descriptions in the example in FIG. 11 are provided by using the network device as an example. Actually, a correspondence between a MAC entity and a subband on a user equipment side is basically the same as that on a network device side except that the user equipment side does not include a correspondence between another user equipment and a subband.

Actually, for each subband on the network device side, when a MAC entity of any UE is bound to the subband, a scheduling period of the MAC entity is consistent with a TTI of the subband. Therefore, solutions in the present invention may mean that there is a large scheduler for each subband, there are different multiplexers and HARQ controllers for different UEs, and the scheduler is responsible for scheduling data of the different UEs according to the TTI of the subband. However, actually, this still means that the large scheduler includes different small schedulers for the different UEs. An actually completed scheduling function is the same as a scheduling function of a MAC entity described in FIG. 11.

For ease of understanding of the data scheduling procedure in this embodiment of the present invention, the following further describes the data scheduling procedure in this embodiment of the present invention with reference to a logical architecture at a logical link layer.

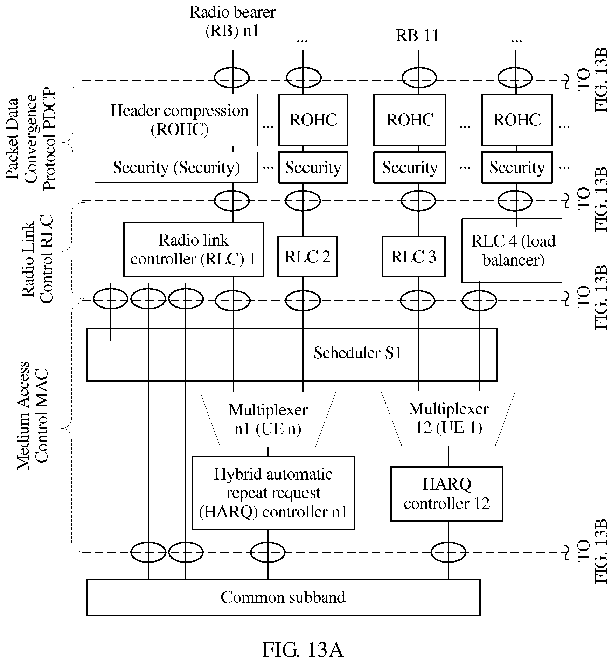

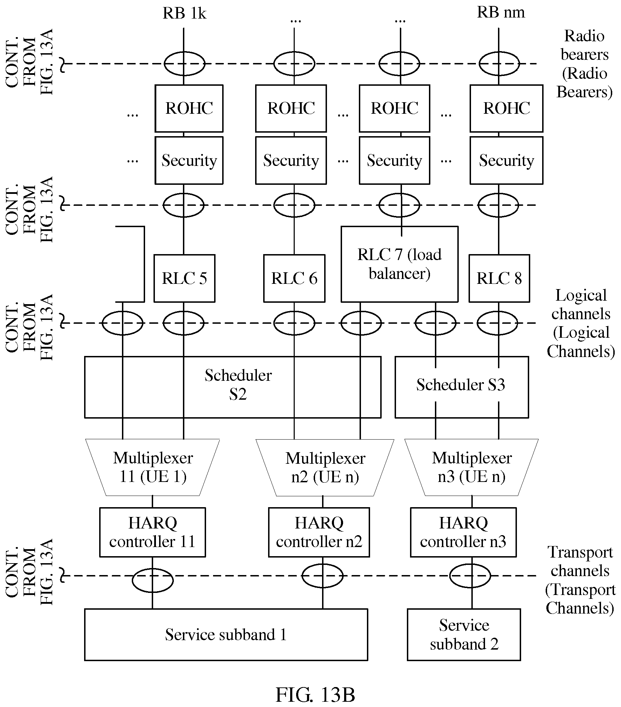

FIG. 13A and FIG. 13B are a schematic diagram of a logical architecture at a logical link layer in a protocol stack in a downlink direction of a network device.

The logical link layer includes a Packet Data Convergence Protocol (Packet Data Convergence Protocol, "PDCP" for short) sublayer, a Radio Link Control (Radio Link Control, "RLC" for short) sublayer, and a MAC sublayer. The PDCP sublayer is the same as a PDCP sublayer in an LTE network, and details are not described herein.

As shown in FIG. 13A and FIG. 13B, the network device supports transmission of n UEs. Generally, UE 1 and UE n are specially used as examples. The UE 1 includes k radio bearers: an RB 11, ..., and an RB 1k. The UE 1 transmits services on two subbands: a common subband (common Subband) and a service subband 1 (Subband 1). The UE n includes m radio bearers: an RB n1, ..., and an RB nm. The UE n transmits services on three subbands: the common subband, the service subband 1 (Subband 1), and a service subband 2 (Subband 2).

For understanding of TTIs of the common subband, the service subband 1 (Subband 1), and the service subband 2, refer to Table 4. Certainly, an actual system is not limited to values provided in Table 4.

The MAC sublayer in FIG. 13A and FIG. 13B includes three schedulers: S1, S2, and S3. These three schedulers respectively correspond to the common subband, the service subband 1, and the service subband 2, and implement a scheduling function of the UEs on the subbands. Therefore, these three schedulers separately perform transmission scheduling according to periods matching the TTIs of the subbands. For example, scheduling periods of S1, S2, and S3 are respectively 1 ms, 0.5 ms, and 0.125 ms. When the network device performs scheduling, each scheduler runs according to a period of the scheduler, and completes transmission scheduling once in each period.

In FIG. 13A, a MAC entity including the scheduler S1 may be bound to the common subband, the MAC entity may be referred to as a common MAC entity, and the common MAC entity is responsible for scheduling data onto the common subband. In addition to user-specific data, the common subband is mainly used to transmit a common broadcast message and a paging message in the system. When accessing a network, UE generally needs to obtain a system message from the common subband. Therefore, each UE has common MAC corresponding to the common subband. Equivalently, the case in FIG. 13A is that the scheduler S1 in the common MAC entity performs scheduling on the common subband for all UEs, and each UE has an independent multiplexer and HARQ controller on the common subband. When S1 schedules data on multiple logical channels of one UE for transmission in one TTI, a multiplexer of the UE concatenates the data on the multiple logical channels to obtain one transport block. Then, S1 schedules the transport block onto the common subband for transmission. During concatenation, control signaling CE at the MAC sublayer may be concatenated. When S1 schedules data of multiple UEs for transmission in one TTI of the common subband, S1 allocates frequency resources in the TTI to these UEs to implement frequency division multiplexing transmission. Then, the transport block obtained after concatenation by the multiplexer is taken over by a HARQ controller, so that reliable transmission on the common subband is completed.

Actually, a scheduler, a multiplexer, and a HARQ controller in a MAC entity of UE do not act independently, but complete scheduling under cooperation with each other. For example, when the scheduler schedules data on multiple logical channels for simultaneous sending, the multiplexer concatenates the data into one transport block for transmission. The sent transport block is taken over by the HARQ controller, and the HARQ controller is responsible for controlling reliable transmission on the subband. When data transmission succeeds, the HARQ controller instructs the scheduler to send a next piece of data; or when data transmission fails, the HARQ controller attempts to resend data whose transmission fails.

A scheduling function of a scheduler in a MAC entity and a scheduling function of the MAC entity need to be distinguished from each other herein. It should be understood that scheduling of the scheduler is scheduling data on at least one logical channel at an upper layer, and the scheduler is mainly responsible for determining an amount, a size, and a source of to-be-sent data. However, the scheduling function of the MAC entity is a complete scheduling procedure, and further includes how to perform multiplexing, how to perform reliable transmission, and the like. Scheduling of a MAC entity and scheduling of a scheduler mentioned below should be understood in a similar way.

It is learned from the foregoing descriptions that bandwidth resources of a common subband are limited, and a transmission attribute of a subband may not be suitable for a service transmission requirement of user equipment, for example, a transmission delay requirement, a bandwidth capacity, or a transmission rate. Therefore, the network device schedules data of the user equipment for communication transmission on a proper subband. A user equipment may use one subband or multiple subbands for communication. This depends on a specific service running status of the user equipment.

A dedicated MAC entity of UE is responsible for scheduling on a service subband. A dedicated MAC entity of each UE includes a common scheduler of the subband and a multiplexer and a HARQ controller of the subband that are exclusive to the UE. Each subband corresponds to one common scheduler of the subband, and the scheduler provides a common scheduling function for all UEs that perform communication on the subband.

In the example shown in FIG. 13B, the UE 1 performs communication on the service subband 1, and the UE n performs communication on both the service subband 1 and the service subband 2. It is assumed that at a current moment, only the UE n performs communication on the service subband 2, and only the UE 1 and the UE n communicate on the service subband 1. The scheduler S3 obtains, at each TTI moment of the service subband 2, data of the UE n on a logical channel bound to the service subband 2 unless a HARQ controller n3 indicates, to the scheduler S3, that data needs to be retransmitted at the TTI moment. The scheduler S3 may obtain data only on one logical channel, or may obtain data on multiple logical channels, according to a data size and a channel capacity status. Then, a multiplexer n3 of the UE n concatenates the data on the logical channel into one transport block that is suitable to be transmitted on the service subband 2. During concatenation, a CE at the MAC sublayer may be concatenated. Then, the transport block is taken over by the HARQ controller n3 of the UE n, so that reliable transmission on the service subband 2 is completed.

Herein, the scheduler S3, the multiplexer n3, and the HARQ controller n3 are included in a MAC entity of the UE n on the service subband 2, and complete scheduling of data of the UE n on the service subband 2 together. A scheduling period of the MAC entity is consistent with a TTI of the service subband 2, so that it can be ensured that scheduling on the service subband 2 is completed once in each TTI of the subband.

Likewise, the scheduler S2 obtains, at each TTI moment of the service subband 1, data of the UE 1 and the UE n on a logical channel bound to the service subband 1 unless data needs to be retransmitted at the TTI moment. The scheduler S2 is further responsible for allocating transmission time-frequency resources on the service subband 1 to the UE 1 and the UE n. Data of only one UE is transmitted or data of multiple UEs is simultaneously transmitted in a TTI according to a bandwidth capacity of the subband 1 and service load of the UE 1 and the UE n on the subband 1. When data of multiple UEs is simultaneously scheduled, frequency resources on the service subband 1 are allocated, by means of frequency division multiplexing, to the multiple UEs for sharing. It is assumed that at the TTI moment, the scheduler S2 schedules data on multiple logical channels of the UE 1 and multiple logical channels of the UE n for transmission in the TTI of the subband 1. In this case, each of a multiplexer 11 of the UE 1 and a multiplexer n2 of the UE n concatenates data on the corresponding multiple logical channels into one transport block. During concatenation, a corresponding CE of each UE may be further concatenated. Then, a HARQ 12 of the UE 1 and a HARQ n2 of the UE n take over corresponding transport blocks, so that reliable transmission on the service subband 1 is completed. The transport blocks of the UE 1 and the UE n are transmitted in the TTI by means of frequency division multiplexing. Therefore, transmission of the UEs does not interfere with each other, and spectrum efficiency is maximized.

In this embodiment of the present invention, the scheduler S2, and the multiplexer n2 and the HARQ n2 of the UE n are included in a MAC entity of the UE n on the service subband 1, and complete scheduling of data of the UE n on the subband 1 together. A scheduling period of the MAC entity of the UE n is consistent with the TTI of the service subband 1, so that it can be ensured that scheduling of the data of the UE n on the service subband 1 is completed once in each TTI of the subband. The scheduler S2, and the multiplexer 11 and the HARQ 12 of the UE 1 are included in a MAC entity of the UE 1 on the service subband 1, and complete scheduling of data of the UE 1 on the service subband 1 together. A scheduling period of the MAC entity of the UE 1 is consistent with the TTI of the service subband 1, so that it can be ensured that scheduling of the data of the UE 1 on the service subband 1 is completed once in each TTI of the subband. It can be learned that in a TTI, the scheduler S2 can schedule data of single UE for transmission, and can also schedule data of multiple UEs for simultaneous transmission. In addition, the scheduler S2 can further schedule multiple logical channels of one UE for simultaneous transmission in the TTI.

Actually, a scheduler in this example of the present invention may be understood as a multithreaded scheduler. Each UE has an independent thread that is responsible for scheduling data of the UE.

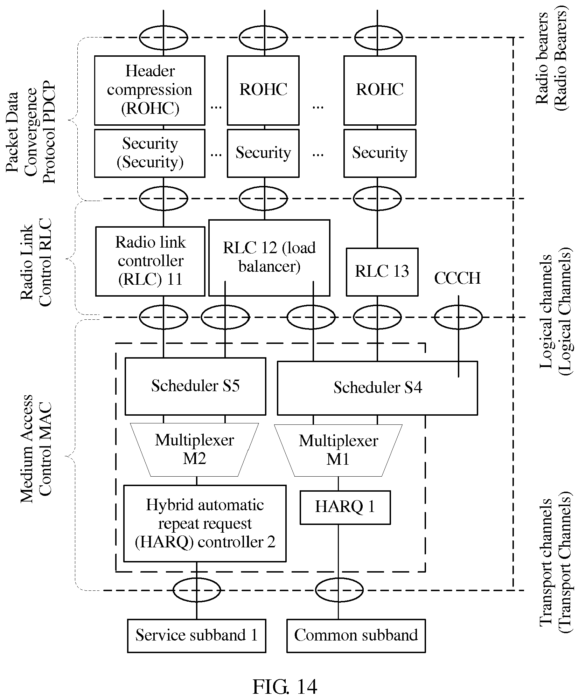

FIG. 13A and FIG. 13B provide descriptions by using a downlink direction of the network device as an example. The following describes a data scheduling procedure in an uplink direction of user equipment in an embodiment of the present invention with reference to FIG. 14.

FIG. 14 is a schematic diagram of a logical architecture at a logical link layer in an uplink direction of user equipment according to an embodiment of the present invention.

The logical architecture, shown in FIG. 14, of the user equipment at the logical link layer is basically the same as a logical architecture of a network device at a logical link layer except that the logical architecture of the network device is for multiple UEs.

As shown in FIG. 14, a scheduler S4, a multiplexer M1, and a HARQ controller 1 are included in a common MAC entity corresponding to the UE and an uplink common subband. A scheduling period of the common MAC entity is consistent with a TTI of the common subband, so that it can be ensured that scheduling of data of the UE on the common subband is completed once in each TTI of the common subband. A scheduler S5, a multiplexer M2, and a HARQ controller 2 are included in a dedicated MAC entity corresponding to the UE and an uplink service subband 1. A scheduling period of the dedicated MAC entity is consistent with a TTI of the service subband 1, so that it can be ensured that scheduling of data of the UE on the service subband 1 is completed once in each TTI of the service subband 1.

It can be learned that in the data scheduling method provided in this embodiment of the present invention, a scheduling period of a MAC entity is consistent with a TTI of a subband. Therefore, during data scheduling, data is scheduled according to the TTI of the subband. This meets user service transmission requirements, such as bandwidth, a rate, and a delay, to the greatest extent, so that user service experience can be ensured.

Logical channels at RLC sublayers shown in FIG. 13A and FIG. 13B and FIG. 14 include a type of special RLC entities. The RLC entity further includes a load balancer (Load Balance) compared with another RLC entity. In an F-OFDM system, spectrum resources are divided into multiple subbands. A subband may be congested instantaneously but another subband may have idle bandwidth resources. In this case, the bandwidth resources of the another subband may be bound to the congested subband, and data of one UE or some UEs is scheduled onto the another subband for transmission.

Service data of the UE is transmitted by using a dedicated logical channel between an RLC sublayer and a MAC sublayer, and one logical channel can be used for scheduling only by using a bound MAC entity. In this example of the present invention, one logical channel is bound to multiple MAC entities, and data on the logical channel is transmitted in the multiple MAC entities by means of load sharing.

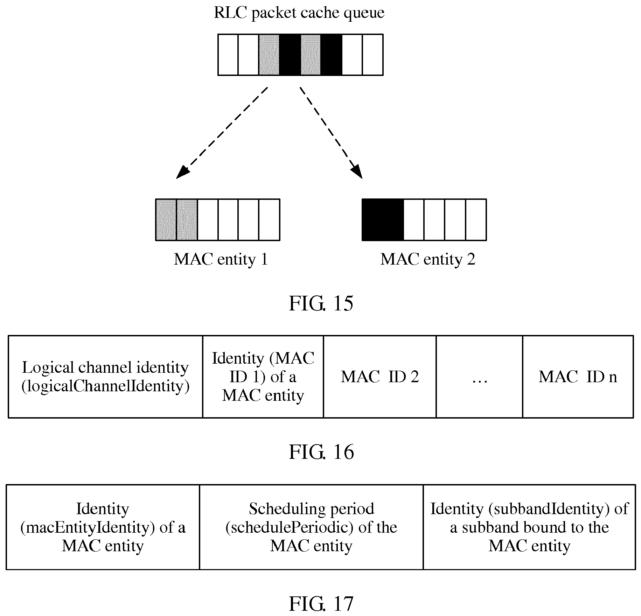

Load sharing is performed in multiple MAC entities on data cached in an RLC entity, as shown in FIG. 15. For sending data in multiple MAC entities in turn, a ratio of sharing among the MAC entities may be determined according to a quantity of transmission resources on a subband.

A procedure of binding multiple subbands to perform load sharing may be initiated by a network device in a downlink direction, or may be initiated by user equipment in an uplink direction. The network device and the user equipment implement binding by using a control message at a MAC sublayer, for example, bind a MAC entity and a subband by using a MAC Binding Subband CE command. A format of a MAC Binding Subband CE is shown in FIG. 16.

A logical channel identity (logicalChannelIdentity) specifies an identity of a logical channel on which load sharing is to be performed. Service data on the logical channel is transmitted by means of load sharing in bound MAC entities according to a specific rule. The rule may be a pre-specified ratio of transmitted data, a pre-specified ratio of transmission rates, or the like. Two or more MAC entities may be specified to transmit the data on the logical channel by means of load sharing. The user equipment and the network device uniquely identify a MAC entity of the user equipment by using a MAC ID.

The MAC entities transmit, by using service subbands bound to the MAC entities, the data received from the logical channel. The network device independently allocates transmission time-frequency resources to the user equipment on each subband. The MAC entities at a receive end receive the data from the bound service subbands, and transmit the data to the logical channel.

During data transmission, a multiplexer in a MAC entity at a transmit end encapsulates an ID of a logical channel to which data belongs into a header of the MAC data. After demultiplexing the MAC data, a demultipexer in a MAC entity at the receive end can learn the logical channel to which the data belongs. Therefore, the MAC entity at the receive end can accurately distribute the received data to the logical channel to which the data belongs.

When MAC entities that are bound together by using a MAC Binding Subband CE to perform logical channel load sharing are not required, the MAC entities need to be unbound by using a MAC Unbinding Subband CE. If all the MAC entities bound to a logical channel are released, only a logical channel identity logicalChannelIdentity needs to be specified. If some of the MAC entities are released, identities MAC IDs of the to-be-released MAC entities need to be further specified. The MAC entities may also be bound to the logical channel again by using the MAC Binding Subband CE. An originally bound MAC entity that is not in a rebinding list is to be unbound.

When a MAC entity for performing logical channel load sharing is being bound, if the MAC entity of a user on the subband is not created, the MAC entity associated with the subband is temporarily created to implement subband binding and service data load sharing. A new dedicated MAC entity may be quickly created by using a MAC Create Entity CE, and a format of the MAC Create Entity CE is shown in FIG. 17.

A MAC Create Entity CE message includes three pieces of key information: an identity macEntityIdentity of the MAC entity, a scheduling period schedulePeriodic of a scheduler in the MAC entity, and an identity subbandldentity of a subband bound to the MAC entity. The schedulePeriodic is not mandatory, and may be indirectly obtained by using the subbandIdentity.

The MAC entity created by using the MAC Create Entity CE is quickly released by using a MAC Delete Entity CE. During releasing, the identity macEntityIdentity of the to-be-released MAC entity is specified.

For binding multiple subbands or MAC entities, a new subband or MAC entity for load sharing needs to meet a service transmission quality requirement. For example, a service that has a high transmission bandwidth requirement but is not quite sensitive to a delay can be transmitted on any subband, but a service that is quite sensitive to a delay cannot be transmitted on a subband whose TTI is relatively long.

In the method in this embodiment, a method for transmitting logical channel data by means of load sharing is implemented, so that when some subband resources are temporarily congested, a subband corresponding to another MAC entity is bound to an existing subband, so that the subband corresponding to the another MAC entity and the existing subband are used to transmit the logical channel service data by means of load sharing. In this way, quick data transmission is implemented.

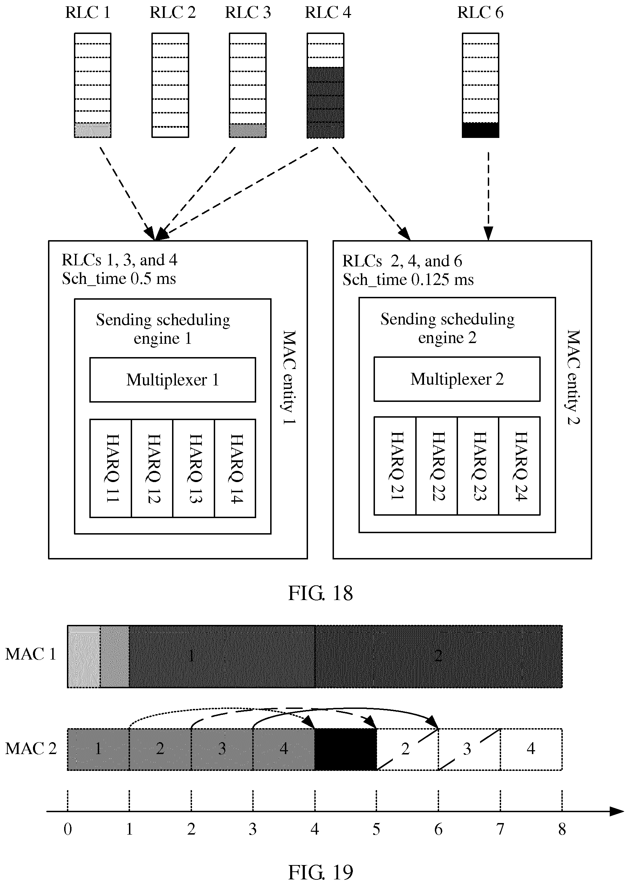

An example of the present invention describes, in detail, working principles of multiple MAC schedulers, at a transmit end, of user equipment. As shown in FIG. 18, it is assumed that UE 1 currently has five logical channels: an RLC 1, an RLC 2, an RLC 3, an RLC 4, and an RLC 6, two dedicated MAC entities are created: MAC 1 and MAC 2, and each MAC entity includes four HARQ procedures. The MAC 1 serves the RLC 1, the RLC 3, and the RLC 4, and a scheduling period of the MAC 1 is 0.5 ms. The MAC 2 serves the RLC 2, the RLC 4, and the RLC 6, and a scheduling period of the MAC 2 is 0.125 ms. In addition, the RLC 4 has relatively heavy load, and therefore, load sharing is implemented in the MAC 1 and the MAC 2. Application of an RLC 5 has ended, and the logical channel is deleted. Therefore, the logical channel is not shown in FIG. 18. For ease of description, this example provides descriptions only from the transmit end. The transmit end may be on the user equipment or may be on a network device.

It can be learned from the scenario assumed in FIG. 18 that, at a current moment, queues of the RLC 1, the RLC 3, and the RLC 6 include a small amount of to-be-sent data, a queue of the RLC 4 includes a relatively large amount of cached data and is congested, and a queue of the RLC 2 includes no to-be-sent data. In addition, it is assumed that the RLC queues are the RLC 1, the RLC 2, the RLC 3, the RLC 4, and the RLC 6 in descending order of priorities.

With reference to the procedure in FIG. 18, as shown in FIG. 19, at a moment 0, the MAC 1 first sends data in the RLC 1 and the RLC 3 according to the queue priorities, and because the RLC 1 and the RLC 3 include a small amount of data, a part of data further needs to be selected from the RLC 4, so that one transport block is formed and is sent by using a HARQ procedure 11. In the first TTI in which the MAC 1 performs sending, the MAC 2 performs sending for four times. However, because a queue priority of the RLC 4 is higher than that of the RLC 6, only data in the RLC 4 is sent in the first TTI. In the second TTI of the MAC 1, only the RLC 4 among the RLC 1, the RLC 3, and the RLC 4 includes to-be-sent data, and the MAC 1 also completes sending data in the RLC 4. At the fourth moment of the MAC 2, that is, in the fifth TTI, the MAC 2 first determines that an ACK is received for data sent in the first TTI, and determines to send new data. In this case, only the RLC 6 includes data, and therefore, the data in the RLC 6 is sent by using a HARQ 21. At the fifth moment and the sixth moment, it is found that data transmitted in the second TTI and the third TTI is not successfully transmitted. Therefore, data sent in the second TTI in a HARQ procedure 22 is retransmitted at the fifth moment, and data sent in the third TTI in a HARQ procedure 23 is retransmitted at the sixth moment. At the seventh moment, it is found that data transmitted at the third moment in a HARQ procedure 24 is successfully transmitted, and sending of data in queues of the RLC 4 and the RLC 6 is completed, and therefore, no sending is performed in this timeslot.

It should be noted that in the foregoing descriptions, it is further assumed that a priority of the MAC 1 is higher than a priority of the MAC 2. If the priority of the MAC 2 is higher than that of the MAC 1, results are different during sending scheduling. This is not discussed in depth herein.

In addition, in this example of the present invention, a function of a load balance in the RLC 4 is degenerated. The load balance in the RLC does not distribute data to multiple MAC entities. Instead, the MAC 1 and the MAC 2 obtain to-be-sent data from a queue of the RLC 4 in an execution order. This is a case of implementation, and is not limited in the present invention.

This example mainly describes, in detail by using an example, how a transmit end performs sending scheduling when a user equipment has multiple MAC entities. Descriptions are provided herein from an implementable angle. During actual implementation, a method that is used may be different from this, and is not limited herein.

In the example described in FIG. 13A and FIG. 13B, at a MAC sublayer in a downlink direction, all UEs share one scheduler on one subband, and the scheduler may be directly responsible for scheduling time-frequency resources on the subband, so that the multiple UEs can communicate on the subband by means of time division multiplexing or frequency division multiplexing.

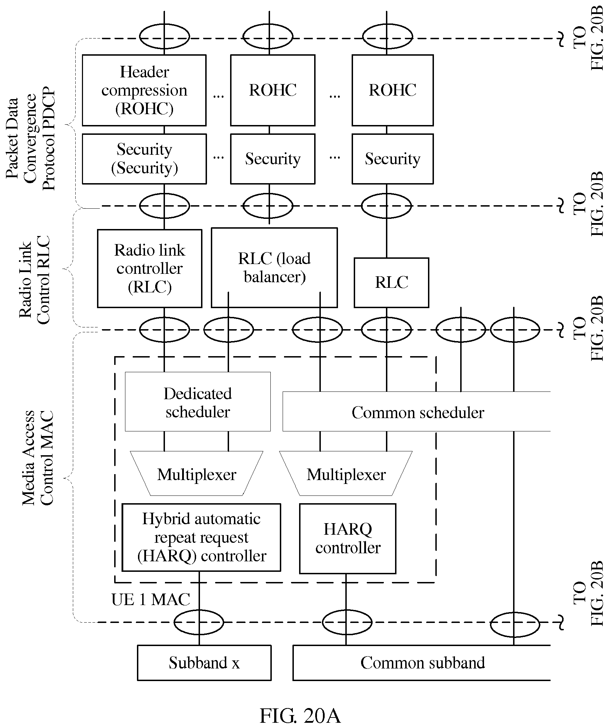

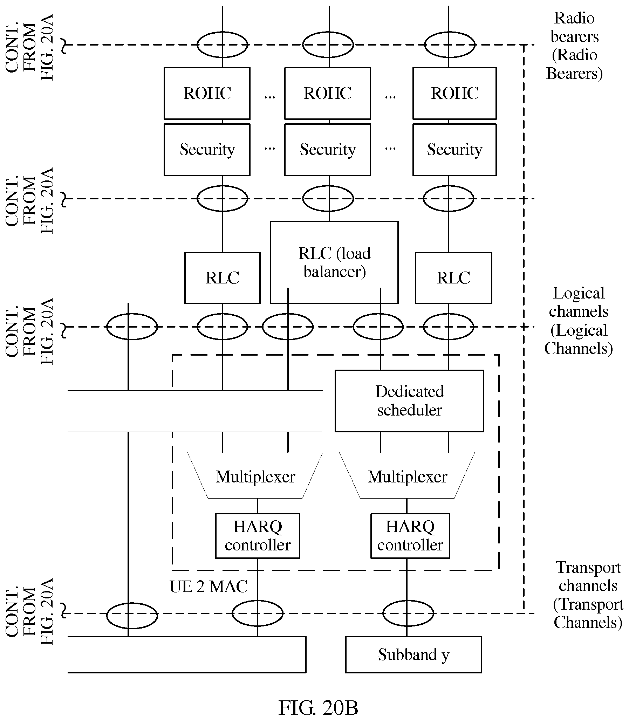

During actual implementation, a radio resource manager (Radio Resource Management, "RRM" for short) in a network device is generally responsible for scheduling a time-frequency resource on a subband, and the RRM notifies each UE of information about a time-frequency resource of the UE on the subband. After a MAC entity of the UE obtains the information about the time-frequency resource of the UE on the subband, a MAC entity of the subband completes scheduling on the subband. Therefore, in FIG. 13A and FIG. 13B, a common scheduler of UEs on a subband may be segmented, and each UE maintains a scheduler exclusive to the UE. The scheduler determines to-be-sent data on multiple logical channels of the UE at a TTI moment determined from the time-frequency resource, and schedules the to-be-sent data. Such a downlink logical architecture in which UEs independently maintain subband schedulers is shown in FIG. 20A and FIG. 20B.

In FIG. 20A and FIG. 20B, UE 1 and UE 2 have independent MAC entities on a subband x and a subband y respectively, and each MAC entity has an independent scheduler, multiplexer, and HARQ. When the subband x and the subband y are a same subband, schedulers of the UE 1 and the UE 2 are also independent from each other, and scheduling periods of the schedulers are also consistent with a TTI of the subband.

In another example of the present invention, a MAC entity, of user equipment, for scheduling on multiple subbands is a whole. Logical channels at an RLC sublayer are classified into multiple logical channel groups, and data in each logical channel group is transmitted only on a subband bound to the MAC entity. The MAC entity includes multiple combinations of a scheduler, a multiplexer, and a HARQ controller. Each combination of a scheduler, a multiplexer, and a HARQ controller is bound to one of the logical channel groups upward, and is bound to the subband downward, so that data in the logical channel group can be scheduled on the subband. Scheduling periods of the multiple schedulers are separately consistent with TTIs of the bound subbands.

In a radio bearer establishment procedure, RLC logical channels in radio bearers that belong to one subband are combined into one logical channel group. In addition, a combination that is of a scheduler, a multiplexer, and a HARQ controller and that is corresponding to the logical channel group is created in a MAC entity, and is bound to a lower-layer subband.

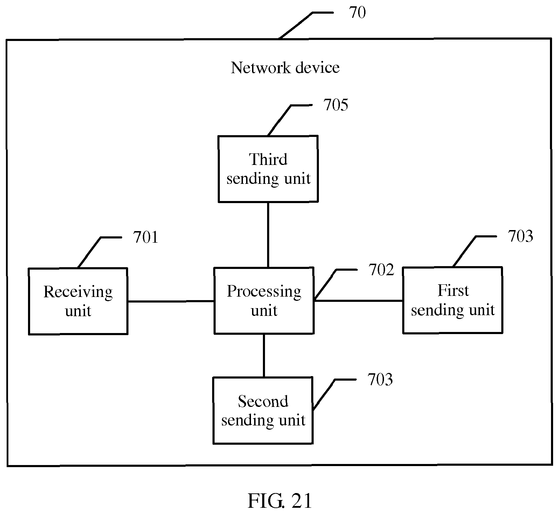

Referring to FIG. 21, an embodiment of a network device 70 provided in an embodiment of the present invention includes:
a receiving unit 701, configured to receive to-be-transmitted data; and
a processing unit 702, configured to:
   obtain an identity of a subband used to transmit the to-be-transmitted data received by the receiving unit and an identity of a to-be-created MAC entity;
   create the MAC entity according to the identity of the to-be-created MAC entity, where the MAC entity is used to schedule the to-be-transmitted data onto the subband indicated by the identity of the subband; and
   set a scheduling period of the to-be-created MAC entity to be consistent with a transmission time interval TTI of the subband.

In the prior art, one MAC entity needs to be responsible for scheduling data onto multiple subbands, and consequently, a scheduling period of the MAC entity is inconsistent with a TTI of a subband. In comparison, the network device provided in this embodiment of the present invention can create, for each subband, a MAC entity whose scheduling period is consistent with a TTI of the subband, so that consistency between data scheduling and transmission is ensured.

According to the invention, the processing unit 702 is specifically configured to obtain the identity of the subband according to a correspondence between a quality of service class identifier QCI of the to-be-transmitted data and the identity of the subband.

Optionally, the network device further includes:
a first sending unit 703, configured to send the identity of the to-be-created MAC entity and at least one of the identity, which is obtained by the processing unit 702, of the subband or the scheduling period of the to-be-created MAC entity to the user equipment.

Optionally, the receiving unit 701 is further configured to receive the scheduling period of the to-be-created MAC entity and the identity of the to-be-created MAC entity that are sent by the user equipment.

The processing unit 702 is further configured to determine the identity of the subband according to the scheduling period of the to-be-created MAC entity that is received by the receiving unit 701.

Optionally, the network device 70 further includes:
a second sending unit 704, configured to send, to the user equipment, an identity of a logical channel, a binding instruction, and identities of multiple MAC entities bound to the logical channel, where the binding instruction is used to instruct the user equipment to bind the multiple MAC entities to the logical channel.

Optionally, the network device 70 further includes a third sending unit 705.

The receiving unit 701 is further configured to receive identities of multiple MAC entities bound to a logical channel and an identity of the logical channel that are sent by the user equipment.

The third sending unit 705 is configured to send a binding instruction to the user equipment, where the binding instruction is used to instruct the user equipment to bind the multiple MAC entities to the logical channel.

In this example of the present invention, the receiving unit may be a receiver, the first sending unit 703, the second sending unit 704, and the third sending unit 705 may be a same sending unit or may be transmitters, and the processing unit may be a processor.

For understanding of the embodiment or any optional embodiment of the network device, refer to related descriptions of FIG. 1 to FIG. 20B, and details are not described herein.

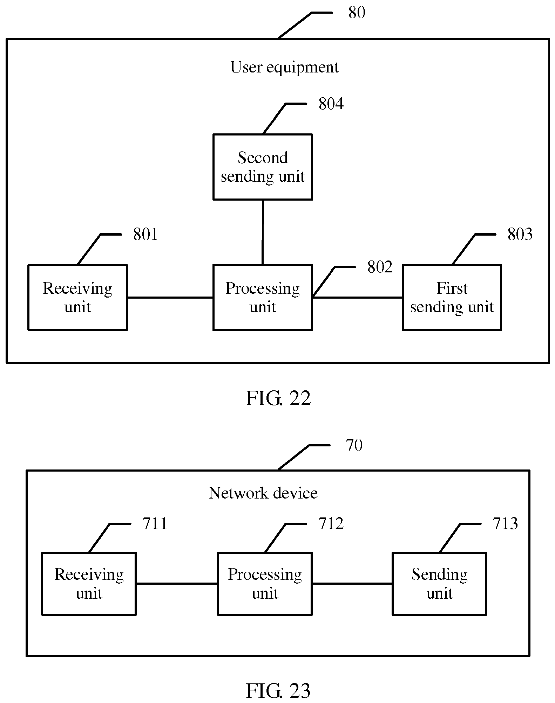

Referring to FIG. 22, an embodiment of user equipment 80 provided in an embodiment of the present invention includes:
a receiving unit 801, configured to receive to-be-transmitted data; and
a processing unit 802, configured to:
   obtain an identity of a subband used to transmit the to-be-transmitted data received by the receiving unit 801 and an identity of a to-be-created MAC entity;
   create the MAC entity according to the identity of the to-be-created MAC entity, where the MAC entity is used to schedule the to-be-transmitted data onto the subband indicated by the identity of the subband; and
   set a scheduling period of the to-be-created MAC entity to be consistent with a transmission time interval TTI of the subband.

In the prior art, one MAC entity needs to be responsible for scheduling data onto multiple subbands, and consequently, a scheduling period of the MAC entity is inconsistent with a TTI of a subband. In comparison, the user equipment provided in this embodiment of the present invention can create, for each subband, a MAC entity whose scheduling period is consistent with a TTI of the subband, so that consistency between data scheduling and transmission is ensured.

According to the invention, the processing unit 802 is specifically configured to obtain the identity of the subband according to a correspondence between a quality of service class identifier QCI of the to-be-transmitted data and the identity of the subband.

Optionally, the receiving unit 801 is further configured to receive the identity of the subband and the identity of the to-be-created MAC entity that are sent by the network device.

Optionally, the receiving unit 801 is further configured to receive the scheduling period of the to-be-created MAC entity and the identity of the to-be-created MAC entity that are sent by the network device.

The processing unit 802 is configured to determine the identity of the subband according to the scheduling period of the to-be-created MAC entity.

Optionally, the user equipment 80 further includes:
a first sending unit 803, configured to send the identity of the MAC entity and at least one of the identity of the subband or the scheduling period of the to-be-created MAC entity to the network device.

Optionally, the receiving unit 801 is further configured to receive identities of multiple MAC entities bound to a logical channel, an identity of the logical channel, and a binding instruction that are sent by the network device.

The processing unit 802 is further configured to bind the multiple MAC entities to the logical channel according to the binding instruction received by the receiving unit 801.

Optionally, the user equipment 80 further includes a second sending unit 804.

The second sending unit 804 is configured to send, to the network device, an identity of a logical channel and identities of multiple MAC entities bound to the logical channel.

The receiving unit 801 is further configured to receive a binding instruction sent by the network device.

The processing unit 802 is further configured to bind the multiple MAC entities to the logical channel according to the binding instruction received by the receiving unit 801.

In this example of the present invention, the receiving unit may be a receiver, the first sending unit 803 and the second sending unit 804 may be a same sending unit or may be transmitters, and the processing unit may be a processor.

For understanding of the embodiment or any optional embodiment of the user equipment, refer to related descriptions of FIG. 1 to FIG. 20B, and details are not described herein.

Referring to FIG. 23, an embodiment of a network device 70 provided in an embodiment of the present invention includes:
a receiving unit 711, configured to obtain to-be-transmitted data; and
a processing unit 712, configured to: determine, according to a quality of service class identifier QCI of the to-be-transmitted data obtained by the receiving unit 711, a Media Access Control MAC entity used to schedule the to-be-transmitted data and a subband used to transmit the to-be-transmitted data; and schedule the to-be-transmitted data onto the subband according to a scheduling period of the MAC entity by using the MAC entity, where the scheduling period of the MAC entity is consistent with a transmission time interval TTI of the subband.

In the prior art, one MAC entity needs to be responsible for scheduling data onto multiple subbands, and consequently, a scheduling period of the MAC entity is inconsistent with a TTI of a subband. In comparison, according to wireless network device provided in this embodiment of the present invention, a scheduling period of a MAC entity that is responsible for scheduling data onto a subband is consistent with a TTI of the subband, so that consistency between data scheduling and transmission is ensured.

According to the invention, the processing unit 712 is specifically configured to determine the subband according to the QCI and a correspondence between the QCI and an identity of the subband.

Optionally, the processing unit 712 is specifically configured to: when the MAC entity is bound to a logical channel group, schedule the to-be-transmitted data from the bound logical channel group by using the MAC entity, and schedule the to-be-transmitted data onto the subband according to the scheduling period of the MAC entity.

Optionally, the processing unit 712 is specifically configured to:
when the MAC entity includes a scheduler, a multiplexer, and a hybrid automatic repeat request HARQ controller,
obtain, from multiple logical channels in the logical channel group by using the scheduler, the to-be-transmitted data transmitted from the multiple logical channels;
multiplex the to-be-transmitted data on the multiple logical channels by using the multiplexer; and
control, by using the hybrid automatic repeat request HARQ controller, reliable transmission, on the subband, of the to-be-transmitted data multiplexed by the multiplexer.

Optionally, when any logical channel in the logical channel group is bound to multiple MAC entities, the any logical channel further includes a load balancer, and the processing unit 712 is further configured to: determine, by using the load balancer, a ratio of scheduling the to-be-transmitted data in the multiple MAC entities, and control the multiple MAC entities to schedule, according to the scheduling ratio, the to-be-transmitted data from the any logical channel.

According to the invention, the processing unit 712 is further configured to:
obtain the identity of the subband used to transmit the to-be-transmitted data and an identity of the MAC entity;
create the MAC entity according to the identity of the MAC entity; and
set the scheduling period of the MAC entity to be consistent with the transmission time interval TTI of the subband.

According to the invention, the processing unit 712 is specifically configured to obtain the identity of the subband according to the correspondence between the quality of service class identifier QCI of the to-be-transmitted data and the identity of the subband.

Optionally, the network device 70 further includes a sending unit 713.

The sending unit 713 is configured to send the identity of the MAC entity and at least one of the identity of the subband or the scheduling period of the MAC entity to the user equipment.

In the embodiment of the wireless network device 70, the receiving unit may be a receiver, the processing unit may be a processor, and the sending unit may be a transmitter.

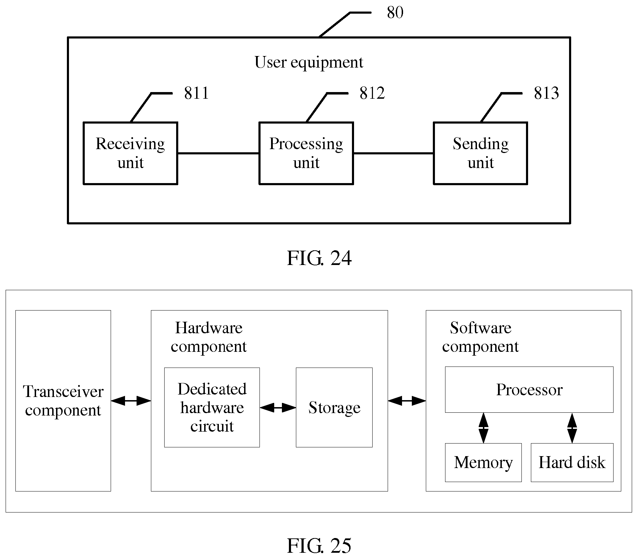

Referring to FIG. 24, an embodiment of user equipment 80 provided in an embodiment of the present invention includes:
a receiving unit 811, configured to obtain to-be-transmitted data; and
a processing unit 812, configured to: determine, according to a quality of service class identifier QCI of the to-be-transmitted data obtained by the receiving unit 811, a Media Access Control MAC entity used to schedule the to-be-transmitted data and a subband used to transmit the to-be-transmitted data; and schedule the to-be-transmitted data onto the subband according to a scheduling period of the MAC entity by using the MAC entity, where the scheduling period of the MAC entity is consistent with a transmission time interval TTI of the subband.

In the prior art, one MAC entity needs to be responsible for scheduling data onto multiple subbands, and consequently, a scheduling period of the MAC entity is inconsistent with a TTI of a subband. In comparison, according to the user equipment provided in this embodiment of the present invention, a scheduling period of a MAC entity that is responsible for scheduling data onto a subband is consistent with a TTI of the subband, so that consistency between data scheduling and transmission is ensured.

According to the invention, the processing unit 812 is specifically configured to determine the subband according to the QCI and a correspondence between the QCI and an identity of the subband.

Optionally, the processing unit 812 is specifically configured to: when the MAC entity is bound to a logical channel group, schedule the to-be-transmitted data from the bound logical channel group by using the MAC entity, and schedule the to-be-transmitted data onto the subband according to the scheduling period of the MAC entity.

Optionally, the processing unit 812 is specifically configured to:
when the MAC entity includes a scheduler, a multiplexer, and a hybrid automatic repeat request HARQ controller,
obtain, from multiple logical channels in the logical channel group by using the scheduler, the to-be-transmitted data transmitted from the multiple logical channels;
multiplex the to-be-transmitted data on the multiple logical channels by using the multiplexer; and
control, by using the hybrid automatic repeat request HARQ controller, reliable transmission, on the subband, of the to-be-transmitted data multiplexed by the multiplexer.

Optionally, when any logical channel in the logical channel group is bound to multiple MAC entities, the any logical channel further includes a load balancer, and the processing unit 812 is further configured to: determine, by using the load balancer, a ratio of scheduling the to-be-transmitted data in the multiple MAC entities, and control the multiple MAC entities to schedule, according to the scheduling ratio, the to-be-transmitted data from the any logical channel.

According to the invention, the processing unit 812 is further configured to:
obtain the identity of the subband used to transmit the to-be-transmitted data and an identity of the MAC entity;
create the MAC entity according to the identity of the MAC entity; and
set the scheduling period of the MAC entity to be consistent with the transmission time interval TTI of the subband.

According to the invention, the processing unit 812 is specifically configured to obtain the identity of the subband according to the correspondence between the quality of service class identifier QCI of the to-be-transmitted data and the identity of the subband.

Optionally, the user equipment 80 further includes a sending unit 813.

The sending unit 813 is configured to send the identity of the MAC entity and at least one of the identity of the subband or the scheduling period of the MAC entity to the network device.

In the embodiment of the user equipment 80, the receiving unit may be a receiver, the processing unit may be a processor, and the sending unit may be a transmitter.

In the foregoing multiple embodiments of the network device/the user equipment, it should be understood that, in one implementation, the receiving unit or the sending unit may be implemented by an input/output I/O device (such as a network interface card), and the processing unit may be implemented by a processor by executing a program or an instruction in a storage (in other words, the processing unit is implemented by both the processor and the special instruction in the storage coupled to the processor); in another implementation, the receiving unit or the sending unit may be implemented by an input/output I/O device (such as a network interface card), and the processing unit may be implemented by a dedicated circuit, where for a specific implementation, refer to the prior art, and details are not described herein; in still another implementation, the receiving unit or the sending unit may be implemented by an input/output I/O device (such as a network interface card), and the processing unit may be implemented by a field-programmable gate array (FPGA, Field-Programmable Gate Array), where for a specific implementation, refer to the prior art, and details are not described herein. The present invention includes but is not limited to the foregoing implementations. It should be understood that solutions implemented according to the ideas of the present invention shall fall within the protection scope of the embodiments of the present invention.

An example provides a hardware structure of a network device/user equipment. Referring to FIG. 25, the hardware structure of the network device/the user equipment may include:
three parts: a transceiver component, a software component, and a hardware component.

The transceiver component is a hardware circuit configured to complete packet receiving/transmission.

The hardware component may also be referred to as a "hardware processing module", or may be more simply referred to as "hardware". The hardware component mainly includes a hardware circuit that implements some specific functions based on dedicated hardware circuits such as an FPGA and an ASIC (probably with cooperation of another accessory component such as a storage). Generally, a processing speed of the hardware component is much faster than that of a general-purpose processor. However, a function of the hardware component is difficult to change provided that the function is customized, and therefore, the hardware component is not flexibly implemented and is usually used for processing some fixed functions. It should be noted that, in an actual application, the hardware component may also include a processor such as an MCU (a microprocessor such as a single-chip microcomputer) or a CPU. However, a main function of these processors is not to implement processing of big data but to perform some control. In this application scenario, a system that includes these components is the hardware component.

The software component (or simply referred to as "software") mainly includes a general-purpose processor (such as a CPU) and some accessory components (for example, storage devices such as a memory and a hard disk). The processor may be configured with a corresponding processing function by means of programming. When the software is used for implementation, the software may be flexibly configured according to a service, but a speed of the software is generally slower than that of the hardware component. After the software completes processing, the hardware component may send processed data by using the transceiver component, or send processed data to the transceiver component by using an interface connected to the transceiver component.

In this example the transceiver component is configured to send or receive an identity of a subband, an identity of a MAC entity, and the like.

Other functions of the software component and the hardware component have been described in detail in the foregoing examples, and are not described herein.

With reference to the accompanying drawings, the following describes in detail the technical solutions in which the receiving unit or the sending unit may be an input/output I/O device (such as a network interface card), and the processing unit may be implemented by a processor by executing a program or an instruction in a storage.

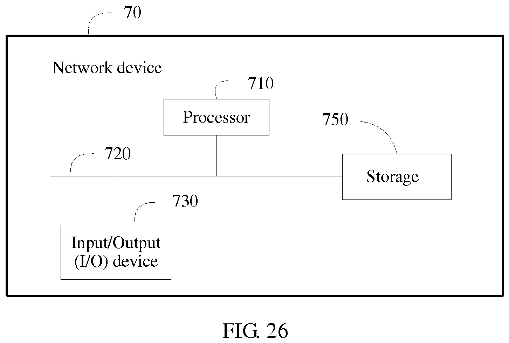

FIG. 26 is a schematic structural diagram of a network device 70 according to an example of the present invention. The network device 70 includes a processor 710, a storage 750, and an input/output I/O device 730. The storage 750 may include a read-only memory and a random access memory, and provide an operation instruction and data for the processor 710. A part of the storage 750 may further include a nonvolatile random access memory (NVRAM).

In some implementations, the storage 750 stores the following element: an executable module or a data structure, or a subset thereof, or an extended set thereof.

In this example of the present invention, by invoking the operation instruction stored in the storage 750 (the operation instruction may be stored in an operating system), the processor 710 performs the following operations:
obtaining an identity of a subband used to transmit to-be-transmitted data and an identity of a to-be-created MAC entity, where the wireless communications device is the network device or user equipment;
creating the MAC entity according to the identity of the to-be-created MAC entity, where the MAC entity is used to schedule the to-be-transmitted data onto the subband indicated by the identity of the subband; and
setting a scheduling period of the to-be-created MAC entity to be consistent with a transmission time interval TTI of the subband.

In the prior art, one MAC entity needs to be responsible for scheduling data onto multiple subbands, and consequently, a scheduling period of the MAC entity is inconsistent with a TTI of a subband. In comparison, the network device provided in this embodiment of the present invention can create, for each subband, a MAC entity whose scheduling period is consistent with a TTI of the subband, so that consistency between data scheduling and transmission is ensured.

The processor 710 controls an operation of the network device 70, and the processor 710 may also be referred to as a CPU (Central Processing Unit, central processing unit). The storage 750 may include a read-only memory and a random access memory, and provide an instruction and data for the processor 710. A part of the storage 750 may further include a nonvolatile random access memory (NVRAM). In a specific application, the components of the network device 70 are coupled together by using a bus system 720. The bus system 720 may include a power bus, a control bus, a status signal bus, and the like in addition to a data bus. However, for clarity of description, various types of buses in the figure are marked as the bus system 720.

The method disclosed in the foregoing embodiment of the present invention may be applied to the processor 710, or implemented by the processor 710. The processor 710 may be an integrated circuit chip and has a signal processing capability. In an implementation process, the steps of the foregoing methods may be performed by using an integrated logic circuit of hardware in the processor 710 or an instruction in a form of software. The processor 710 may be a general-purpose processor, a digital signal processor (DSP), an application-specific integrated circuit (ASIC), a field-programmable gate array (FPGA) or another programmable logic component, a discrete gate or a transistor logic component, or a discrete hardware component. The processor 710 may implement or execute the methods, steps, and logical block diagrams disclosed in the embodiments of the present invention. The general-purpose processor may be a microprocessor, or the processor may be any conventional processor or the like. The steps of the methods disclosed with reference to the embodiments of the present invention may be directly executed and completed by a hardware decoding processor, or may be executed and completed by a combination of hardware and a software module in a decoding processor. The software module may be located in a mature storage medium in the field, such as a random access memory, a flash memory, a read-only memory, a programmable read-only memory, an electrically-erasable programmable memory, or a register. The storage medium is located in the storage 750. The processor 710 reads information from the storage 750, and performs the steps of the foregoing methods in combination with hardware in the processor 710.

According to the invention, the processor 710 is specifically configured to obtain the identity of the subband according to a correspondence between a quality of service class identifier QCI of the to-be-transmitted data and the identity of the subband.

Optionally, the I/O device 730 is configured to send the identity of the to-be-created MAC entity and at least one of the identity of the subband or the scheduling period of the to-be-created MAC entity to the user equipment.

Optionally, the I/O device 730 is configured to receive the identity of the subband used to transmit the to-be-transmitted data and the identity of the to-be-created MAC entity that are sent by the user equipment.

Optionally, the I/O device 730 is configured to receive the scheduling period of the to-be-created MAC entity and the identity of the to-be-created MAC entity that are sent by the user equipment.

The processor 710 is configured to determine the identity of the subband according to the scheduling period of the to-be-created MAC entity.

Optionally, the I/O device 730 is configured to send, to the user equipment, an identity of a logical channel, a binding instruction, and identities of multiple MAC entities bound to the logical channel, where the binding instruction is used to instruct the user equipment to bind the multiple MAC entities to the logical channel.

Optionally, the I/O device 730 is configured to: receive identities of multiple MAC entities bound to a logical channel and an identity of the logical channel that are sent by the user equipment; and send a binding instruction to the user equipment, where the binding instruction is used to instruct the user equipment to bind the multiple MAC entities to the logical channel.

In a data scheduling procedure,
the I/O device 730 is configured to obtain to-be-transmitted data; and
the processor 710 is configured to: determine, according to a quality of service class identifier QCI of the to-be-transmitted data, a Media Access Control MAC entity used to schedule the to-be-transmitted data and a subband used to transmit the to-be-transmitted data; and schedule the to-be-transmitted data onto the subband according to a scheduling period of the MAC entity by using the MAC entity, where the scheduling period of the MAC entity is consistent with a transmission time interval TTI of the subband.

The processor 710 is configured to determine the subband according to the QCI and a correspondence between the QCI and an identity of the subband.

Optionally, the processor 710 is specifically configured to: when the MAC entity is bound to a logical channel group, schedule the to-be-transmitted data from the bound logical channel group by using the MAC entity, and schedule the to-be-transmitted data onto the subband according to the scheduling period of the MAC entity.

Optionally, the processor 710 is specifically configured to: when the MAC entity includes a scheduler, a multiplexer, and a hybrid automatic repeat request HARQ controller,
obtain, from multiple logical channels in the logical channel group by using the scheduler, the to-be-transmitted data transmitted from the multiple logical channels;
multiplex the to-be-transmitted data on the multiple logical channels by using the multiplexer; and
control, by using the hybrid automatic repeat request HARQ controller, reliable transmission, on the subband, of the to-be-transmitted data multiplexed by the multiplexer.

Optionally, when any logical channel in the logical channel group is bound to multiple MAC entities, the any logical channel further includes a load balancer, and the processor 710 is further configured to: determine, by using the load balancer, a ratio of scheduling the to-be-transmitted data in the multiple MAC entities, and control the multiple MAC entities to schedule, according to the scheduling ratio, the to-be-transmitted data from the any logical channel.

Optionally, the processor 710 is further configured to:
obtain the identity of the subband used to transmit the to-be-transmitted data and an identity of the MAC entity;
create the MAC entity according to the identity of the MAC entity; and
set the scheduling period of the MAC entity to be consistent with the transmission time interval TTI of the subband.

According to the invention, the processor 710 is specifically configured to obtain the identity of the subband according to the correspondence between the quality of service class identifier QCI of the to-be-transmitted data and the identity of the subband.

Optionally, the I/O device 730 is configured to send the identity of the MAC entity and at least one of the identity of the subband or the scheduling period of the MAC entity to the user equipment.

For understanding of the embodiment corresponding to FIG. 26, refer to related descriptions of FIG. 1 to FIG. 20B, and details are not described herein.

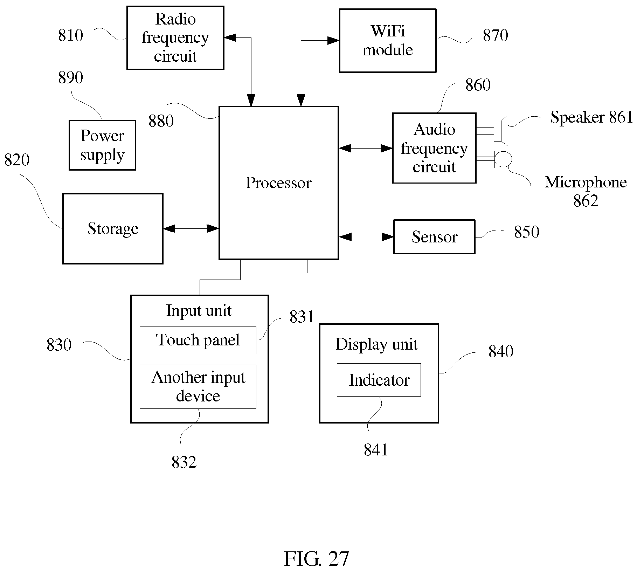

FIG. 27 shows a block diagram of a partial structure of user equipment 80 according to an example of the present invention. Referring to FIG. 27, the user equipment includes parts such as a radio frequency circuit 810, a storage 820, an input unit 830, a display unit 840, a sensor 850, an audio frequency circuit 860, a WiFi module 870, a processor 880, and a power supply 890. A person skilled in the art may understand that the structure of the user equipment shown in FIG. 27 does not constitute a limitation on the user equipment, parts more or less than those shown in FIG. 27 may be included, some parts may be combined, or the parts may be arranged in a different way. The user equipment in this example of the present invention may be a terminal device such as a mobile phone.

The following describes the composition parts of the user equipment in detail with reference to FIG. 27.

The radio frequency circuit 810 may be configured to receive an identity of the to-be-created MAC entity and at least one of an identity of a subband or a scheduling period of the to-be-created MAC entity.

The storage 820 may be configured to store a software program and a module, and the processor 880 executes various functional applications of the user equipment and performs data processing by running the software program and the module that are stored in the storage 820. The storage 820 may mainly include a program storage area and a data storage area. The program storage area may store an operating system, an application program (such as a sound play function or an image play function) that is required by at least one function, and the like. The data storage area may store data (such as audio data or a phonebook) that is created according to use of the user equipment, and the like. In addition, the storage 820 may include a high-speed random access memory, and may further include a nonvolatile memory, such as at least one magnetic disk storage component, a flash memory component, or another volatile solid-state storage component.

The input unit 830 may be configured to: receive numerical or character information that is input, and generate key signal input related to a user setting and function control of the user equipment 80. Specifically, the input unit 830 may include a touch panel 831 and another input device 832. The touch panel 831, also referred to as a touchscreen, may collect a touch operation of a user on or near the touch panel 831 (for example, an operation performed by the user on the touch panel 831 or near the touch panel 831 by using any proper object or accessory such as a finger or a stylus), and drive corresponding connected user equipment according to a preset program. Optionally, the touch panel 831 may include two parts: touch detection user equipment and a touch controller. The touch detection user equipment detects a touch orientation of the user, detects a signal brought by a touch operation, and transfers the signal to the touch controller. The touch controller receives touch information from the touch detection user equipment, converts the touch information into contact coordinates, then sends the contact coordinates to the processor 880, and can receive and execute a command sent by the processor 880. In addition, the touch panel 831 may be implemented by using multiple types, such as a resistive type, a capacitive type, an infrared ray, and a surface acoustic wave. In addition to the touch panel 831, the input unit 830 may include the another input device 832. Specifically, the another input device 832 may include but is not limited to one or more of a physical keyboard, a function key (for example, a volume control key or an on/off key), a trackball, a mouse, a joystick, or the like.

The display unit 840 may be configured to display information that is input by the user or information provided for the user, and various menus of the user equipment. The display unit 840 may include an indicator 841. Optionally, the indicator 841 may be configured in a form such as a liquid crystal display (Liquid Crystal Display, LCD) or an organic light-emitting diode (Organic Light-Emitting Diode, OLED). Further, the touch panel 831 may cover the indicator 841. After detecting a touch operation on or near the touch panel 831, the touch panel 831 transfers the touch operation to the processor 880, so that a type of a touch event can be determined, and then, the processor 880 provides corresponding visual output on the indicator 841 according to the type of the touch event. Although the touch panel 831 and the indicator 841 in FIG. 27 are used as two independent parts to implement input and input functions of the user equipment, in some embodiments, the touch panel 831 and the indicator 841 may be integrated to implement the input and output functions of the user equipment.

The user equipment 80 may further include at least one sensor 850.

The audio frequency circuit 860, a speaker 861, and a microphone 862 may provide an audio interface between the user and the user equipment. The audio frequency circuit 860 may transmit, to the speaker 861, an electrical signal converted from received audio data, and the speaker 861 converts the electrical signal into a sound signal for output. In addition, the microphone 862 converts a collected sound signal into an electrical signal, the audio frequency circuit 860 receives the electrical signal, converts the electrical signal into audio data, and then outputs the audio data to the processor 880 for processing, and then, the audio data is sent to, for example, another user equipment by using the radio frequency circuit 810, or the audio data is output to the storage 820 for further processing.

The processor 880 is a control center of the user equipment, is connected to various parts of the entire user equipment by using various interfaces and lines, executes various functions of the user equipment and performs data processing by running or executing the software program and/or the module stored in the storage 820 and by invoking data stored in the storage 820, so as to perform overall monitoring on the user equipment. Optionally, the processor 880 may include one or more processing units. Preferably, an application processor and a modem processor may be integrated into the processor 880. The application processor mainly processes an operating system, a user interface, an application program, and the like, and the modem processor mainly processes wireless communication. It can be understood that the modem processor may not be integrated into the processor 880.

In this example of the present invention, the processor 880 is configured to:
obtain an identity of a subband used to transmit to-be-transmitted data and an identity of a to-be-created MAC entity;
create the MAC entity according to the identity of the to-be-created MAC entity, where the MAC entity is used to schedule the to-be-transmitted data onto the subband indicated by the identity of the subband; and
set a scheduling period of the to-be-created MAC entity to be consistent with a transmission time interval TTI of the subband.

The user equipment 80 further includes the power supply 890 (such as a battery) that supplies power to each part. Preferably, the power supply may be logically connected to the processor 880 by using a power supply management system, so as to implement functions, such as management of charging, discharging, and power consumption, by using the power supply management system.

The user equipment 80 may further include a camera, a Bluetooth module, and the like although they are not shown. Details are not described herein.

In this embodiment of the present invention, the following may be further included.

Optionally, the processor 880 is specifically configured to obtain the identity of the subband according to a correspondence between a quality of service class identifier QCI of the to-be-transmitted data and the identity of the subband.

Optionally, the radio frequency circuit 810 is configured to receive the identity of the subband and the identity of the to-be-created MAC entity that are sent by the network device.

Optionally, the radio frequency circuit 810 is configured to receive the scheduling period of the to-be-created MAC entity and the identity of the to-be-created MAC entity that are sent by the network device.

The processor 880 is configured to determine the identity of the subband according to the scheduling period of the to-be-created MAC entity.

Optionally, the radio frequency circuit 810 is configured to send the identity of the MAC entity and at least one of the identity of the subband or the scheduling period of the to-be-created MAC entity to the network device.

Optionally, the radio frequency circuit 810 is configured to receive identities of multiple MAC entities bound to a logical channel, an identity of the logical channel, and a binding instruction that are sent by the network device.

The processor 880 is configured to bind the multiple MAC entities to the logical channel according to the binding instruction.

Optionally, the radio frequency circuit 810 is configured to: send, to the network device, an identity of a logical channel and identities of multiple MAC entities bound to the logical channel; and receive a binding instruction sent by the network device.

The processor 880 is configured to bind the multiple MAC entities to the logical channel according to the binding instruction.

In a data scheduling procedure,
the processor 880 is configured to: obtain to-be-transmitted data; determine, according to a quality of service class identifier QCI of the to-be-transmitted data, a Media Access Control MAC entity used to schedule the to-be-transmitted data and a subband used to transmit the to-be-transmitted data; and schedule the to-be-transmitted data onto the subband according to a scheduling period of the MAC entity by using the MAC entity, where the scheduling period of the MAC entity is consistent with a transmission time interval TTI of the subband.

The processor 880 is specifically configured to determine the subband according to the QCI and a correspondence between the QCI and an identity of the subband.

The processor 880 is specifically configured to: when the MAC entity is bound to a logical channel group, schedule the to-be-transmitted data from the bound logical channel group by using the MAC entity, and schedule the to-be-transmitted data onto the subband according to the scheduling period of the MAC entity.

The processor 880 is specifically configured to: when the MAC entity includes a scheduler, a multiplexer, and a hybrid automatic repeat request HARQ controller,
obtain, from multiple logical channels in the logical channel group by using the scheduler, the to-be-transmitted data transmitted from the multiple logical channels;
multiplex the to-be-transmitted data on the multiple logical channels by using the multiplexer; and
control, by using the hybrid automatic repeat request HARQ controller, reliable transmission, on the subband, of the to-be-transmitted data multiplexed by the multiplexer.

When any logical channel in the logical channel group is bound to multiple MAC entities, the any logical channel further includes a load balancer, and the processor 880 is further configured to: determine, by using the load balancer, a ratio of scheduling the to-be-transmitted data in the multiple MAC entities, and control the multiple MAC entities to schedule, according to the scheduling ratio, the to-be-transmitted data from the any logical channel.

Optionally, the processor 880 is further configured to:
obtain the identity of the subband used to transmit the to-be-transmitted data and an identity of the MAC entity;
create the MAC entity according to the identity of the MAC entity; and
set the scheduling period of the MAC entity to be consistent with the transmission time interval TTI of the subband.

Optionally, the processor 880 is specifically configured to obtain the identity of the subband according to the correspondence between the quality of service class identifier QCI of the to-be-transmitted data and the identity of the subband.

Optionally, the radio frequency circuit 810 is configured to send the identity of the MAC entity and at least one of the identity of the subband or the scheduling period of the MAC entity to the network device.

For understanding of the example corresponding to FIG. 27, refer to related descriptions of FIG. 1 to FIG. 20B, and details are not described herein.

For understanding of an example of a wireless communications system provided in the examples of the present invention, refer to the examples in FIG. 4 to FIG. 7, and details are not described herein.

A person of ordinary skill in the art may understand that all or some of the steps of the methods in the embodiments may be implemented by a program instructing relevant hardware. The program may be stored in a computer readable storage medium. The storage medium may include: a ROM, a RAM, a magnetic disk, or an optical disc.

The method for creating a MAC entity, the data scheduling method, the device, and the system are described in detail above. The principle and implementations of the present invention are described by using specific examples in this specification. The description about the embodiments is merely intended to help understand the method and core ideas of the present invention. In addition, a person of ordinary skill in the art can make various modifications and variations to the present invention in terms of specific implementations and application scopes according to the ideas of the present invention. In conclusion, the content of this specification shall not be construed as a limitation to the present invention.

## Claims

1. A data scheduling method, comprising:
obtaining (601), by a wireless communications device, to-be-transmitted data;
determining (602), by the wireless communications device, a subband used to transmit the to-be-transmitted data according to a quality of service class identifier, QCI, of the to-be-transmitted data and a correspondence between the QCI and an identity of the subband, wherein the identity of the subband indicates the determined subband;
determining, by the wireless communications device according to the QCI of the to-be-transmitted data, an identity of a Media Access Control, MAC, entity used to schedule the to-be-transmitted data, entity uniquely corresponds to one subband;
creating, by the wireless communications device, the MAC entity according to the identity of the MAC entity;
setting, by the wireless communications device, the scheduling period of the MAC entity to be equal to the transmission time interval TTI of the determined subband;
and
scheduling (603), by the wireless communications device, the to-be-transmitted data onto the determined subband according to a scheduling period of the MAC entity by using the MAC entity.

2. The method according to claim 1, wherein the wireless communications device is a network device or a user equipment.

3. The method according to claim 2, wherein when the wireless communications device is a network device, the method further comprises:
sending, by the network device, the identity of the MAC entity and at least one of the identity of the subband or the scheduling period of the MAC entity to user equipment; or,
wherein when the wireless communications device is user equipment, the method further comprises:
sending, by the user equipment, the identity of the MAC entity and at least one of the identity of the subband or the scheduling period of the MAC entity to a network device.

4. A network device or a user equipment, comprising:
a receiving unit (711, 811), configured to obtain to-be-transmitted data; and
a processing unit (712, 812), configured to:
determine, a subband used to transmit the to-be-transmitted data according to a quality of service class identifier, QCI, of the to-be-transmitted data and a correspondence between the QCI and an identity of the subband, wherein the identity of the subband indicates the determined subband;
determine, according to the QCI of the to-be-transmitted data, an identity of a Media Access Control, MAC, entity used to schedule the to-be-transmitted data, wherein each MAC entity uniquely corresponds to one subband;
create, the MAC entity according to the identity of the MAC entity;
set, the scheduling period of the MAC entity to be equal to the transmission time interval TTI of the determined subband; and
schedule the to-be-transmitted data onto the determined subband according to a scheduling period of the MAC entity by using the MAC entity.

5. The network device or user equipment according to claim 4, wherein the network device further comprises a sending unit (713, 813); and
the sending unit (713) is configured to send the identity of the MAC entity and at least one of the identity of the subband or the scheduling period of the MAC entity to user equipment.

## Patentansprüche

1. Datenplanungsverfahren, das Folgendes umfasst:
Erhalten (601), durch eine Drahtloskommunikationsvorrichtung, von zu übertragenden Daten;
Bestimmen (602), durch die Drahtloskommunikationsvorrichtung, eines Teilbandes, das verwendet wird, um die zu übertragenden Daten gemäß einem Dienstgüteklassenbezeichner (quality of service class identifier - QCI) der zu übertragenden Daten und einer Entsprechung zwischen dem QCI und einer Identität des Teilbandes zu übertragen, wobei die Identität des Teilbandes das bestimmte Teilband angibt;
Bestimmen, durch die Drahtloskommunikationsvorrichtung gemäß dem QCI der zu übertragenden Daten, einer Identität einer Mediumzugangssteuerungs(Media Access Control - MAC)-Entität, die verwendet wird, um die zu übertragenden Daten zu planen, wobei jede MAC-Entität einem Teilband eindeutig entspricht;
Erzeugen, durch die Drahtloskommunikationsvorrichtung, der MAC-Entität gemäß der Identität der MAC-Entität;
Einstellen, durch die Drahtloskommunikationsvorrichtung, dass der Planungszeitraum der MAC-Entität gleich dem Übertragungszeitintervall (transmission time interval - TTI) des bestimmten Teilbandes ist;
und
Planen (603), durch die Drahtloskommunikationsvorrichtung, der zu übertragenden Daten auf das bestimmte Teilband gemäß einem Planungszeitraum der MAC-Entität durch Verwenden der MAC-Entität.

2. Verfahren nach Anspruch 1, wobei die Drahtloskommunikationsvorrichtung eine Netzwerkvorrichtung oder eine Benutzereinrichtung ist.

3. Verfahren nach Anspruch 2, wobei, wenn die Drahtloskommunikationsvorrichtung eine Netzwerkvorrichtung ist, das Verfahren ferner Folgendes umfasst:
Senden, durch die Netzwerkvorrichtung, der Identität der MAC-Entität und der Identität des Teilbandes und/oder des Planungszeitraums der MAC-Entität an die Benutzereinrichtung; oder
wobei, wenn die Drahtloskommunikationsvorrichtung eine Benutzereinrichtung ist, das Verfahren ferner Folgendes umfasst:
Senden, durch die Benutzereinrichtung, der Identität der MAC-Entität und der Identität des Teilbandes und/oder des Planungszeitraums der MAC-Entität an eine Netzwerkvorrichtung.

4. Netzwerkvorrichtung oder Benutzereinrichtung, die Folgendes umfasst:
eine Empfangseinheit (711, 811), die konfiguriert ist, um zu übertragende Daten zu erhalten; und
eine Verarbeitungseinheit (712, 812), die für Folgendes konfiguriert ist:
Bestimmen eines Teilbandes, das verwendet wird, um die zu übertragenden Daten gemäß einem Dienstgüteklassenbezeichner (QCI) der zu übertragenden Daten und einer Entsprechung zwischen dem QCI und einer Identität des Teilbandes zu übertragen, wobei die Identität des Teilbandes das bestimmte Teilband angibt;
Bestimmen, gemäß dem QCI der zu übertragenden Daten, einer Identität einer Mediumzugangssteuerungs(MAC)-Entität, die verwendet wird, um die zu übertragenden Daten zu planen, wobei jede MAC-Entität einem Teilband eindeutig entspricht;
Erzeugen der MAC-Entität gemäß der Identität der MAC-Entität;
Einstellen, dass der Planungszeitraum der MAC-Entität gleich dem Übertragungszeitintervall (TTI) des bestimmten Teilbandes ist;
Planen der zu übertragenden Daten auf das bestimmte Teilband gemäß einem Planungszeitraum der MAC-Entität durch Verwenden der MAC-Entität.

5. Netzwerkvorrichtung oder Benutzereinrichtung nach Anspruch 4, wobei die Netzwerkvorrichtung ferner Folgendes umfasst: eine Sendeeinheit (713, 813); und
die Sendeeinheit (713) konfiguriert ist, um die Identität der MAC-Entität und die Identität des Teilbandes und/oder den Planungszeitraum der MAC-Entität an die Benutzereinrichtung zu senden.

## Revendications

1. Procédé d'ordonnancement de données, comprenant :
l'obtention (601), par un dispositif de communication sans fil, de données à transmettre ;
la détermination (602), par le dispositif de communication sans fil, d'une sous-bande utilisée pour transmettre les données à transmettre selon un identifiant de classe de qualité de service, QCI, des données à transmettre et d'une correspondance entre le QCI et une identité de la sous-bande, l'identité de la sous-bande indiquant la sous-bande déterminée ;
la détermination, par le dispositif de communication sans fil selon le QCI des données à transmettre, d'une identité d'une entité de contrôle d'accès au support, MAC, utilisée pour ordonnancer les données à transmettre, chaque entité MAC correspondant de manière unique à une sous-bande ;
la création, par le dispositif de communication sans fil, de l'entité MAC selon l'identité de l'entité MAC ;
le réglage, par le dispositif de communication sans fil, de la période d'ordonnancement de l'entité MAC afin qu'elle soit égale à l'intervalle de temps de transmission, TTI, de la sous-bande déterminée ;
et
l'ordonnancement (603), par le dispositif de communication sans fil, des données à transmettre sur la sous-bande déterminée selon une période d'ordonnancement de l'entité MAC en utilisant l'entité MAC.

2. Procédé selon la revendication 1, dans lequel le dispositif de communication sans fil est un dispositif réseau ou un équipement utilisateur.

3. Procédé selon la revendication 2, dans lequel, lorsque l'appareil de communication sans fil est un dispositif réseau, le procédé comprend en outre :
l'envoi, par le dispositif réseau, de l'identité de l'entité MAC et d'une identité de la sous-bande et/ou de la période d'ordonnancement de l'entité MAC à l'équipement utilisateur ; ou,
dans lequel lorsque le dispositif de communication sans fil est un équipement utilisateur, le procédé comprend en outre :
l'envoi, par l'équipement utilisateur, de l'identité de l'entité MAC et de l'identité de la sous-bande et/ou de la période d'ordonnancement de l'entité MAC à un dispositif réseau.

4. Dispositif réseau ou équipement utilisateur, comprenant :
une unité de réception (711, 811), configurée pour obtenir des données à transmettre ; et
une unité de traitement (712, 812), configurée pour :
déterminer une sous-bande utilisée pour transmettre les données à transmettre selon un identifiant de classe de qualité de service, QCI, des données à transmettre et une correspondance entre le QCI et une identité de la sous-bande, l'identité de la sous-bande indiquant la sous-bande déterminée ;
déterminer, selon le QCI des données à transmettre, une identité d'une entité de contrôle d'accès au support, MAC, utilisée pour ordonnancer les données à transmettre, chaque entité MAC correspondant de manière unique à une sous-bande ;
créer l'entité MAC selon l'identité de l'entité MAC ;
régler la période d'ordonnancement de l'entité MAC afin qu'elle soit égale à l'intervalle de temps de transmission, TTI, de la sous-bande déterminée ; et
ordonnancer les données à transmettre sur la sous-bande déterminée selon une période d'ordonnancement de l'entité MAC en utilisant l'entité MAC.

5. Dispositif réseau ou équipement utilisateur selon la revendication 4, dans lequel le dispositif réseau comprend en outre une unité d'envoi (713, 813) ; et
l'unité d'envoi (713) est configurée pour envoyer l'identité de l'entité MAC et l'identité de la sous-bande et/ou la période d'ordonnancement de l'entité MAC à l'équipement utilisateur.
